# FASCICULE DE BREVET EUROPEEN

(11) **EP 3 494 430 B1**
(45) Date de publication et mention de la délivrance du brevet: **24.06.2026**
(21) Numéro de dépôt: 17765224.5
(22) Date de dépôt: 04.08.2017
(51) Int. Cl.: G02B 23/10, G01C 21/02, G02B 27/02, G09B 27/04, G02B 27/00, G02B 27/01

(54) **PROCÉDÉ D'ÉLABORATION D'UNE IMAGE NUMÉRIQUE, PRODUIT PROGRAMME D'ORDINATEUR ET SYSTÈME OPTIQUE ASSOCIÉS**
VERFAHREN ZUR ERZEUGUNG EINES DIGITALEN BILDES, ZUGEHÖRIGES COMPUTERPROGRAMMPRODUKT UND OPTISCHES SYSTEM
METHOD FOR PRODUCING A DIGITAL IMAGE, ASSOCIATED COMPUTER PROGRAM PRODUCT AND OPTICAL SYSTEM

(30) Priorité: 05.08.2016 FR 1657596
(43) Date de publication de la demande: 12.06.2019
(73) Titulaire: Unistellar, 13001 Marseille (FR)
(72) Inventeur: MALVACHE, Arnaud, 13590 Fuveau (FR); BOROT, Antonin, 13007 Marseille (FR); LEFAUDEUX, Benjamin, Menlo Park, CA 94025 (US); MARFISI, Laurent, 13007 Marseille (FR)
(74) Mandataire: Roman, Alexis
(86) Numéro de dépôt international: PCT/FR2017/052203
(87) Numéro de publication internationale: WO 2018/025001

(56) Documents cités:
- EP-A1- 2 472 472
- JP-A- 2009 258 212
- JP-A- 2009 288 269
- JP-A- H0 572 486
- US-A1- 2001 000 677
- US-A1- 2016 109 695
- LINTU A ET AL: "An Augmented Reality System for Astronomical Observations", VIRTUAL REALITY, 2006. IEEE ALEXANDRIA, VA, USA 25-29 MARCH 2006, PISCATAWAY, NJ, USA,IEEE, 25 March 2006 (2006-03-25), pages 16 - 16, XP010912069, ISBN: 978-1-4244-0224-3, DOI: 10.1109/VR.2006.24
- ALEXEI V. FILIPPENKO ET AL: "Abstract", INTERNATIONAL ASTRONOMICAL UNION COLLOQUIUM, vol. 183, 1 January 2001 (2001-01-01), pages 121 - 130, XP055357766, ISSN: 0252-9211, DOI: 10.1017/S0252921100078738

## Description

L'invention concerne un système optique permettant de restituer une image naturelle d'une scène d'étude conjuguée à une image numérique, afin de caractériser et de mettre en exergue des objets présents sur ladite image naturelle. Un tel système optique peut, à titre d'exemples non limitatifs, consister en une lunette astronomique, un télescope ou des jumelles.

Plus précisément, l'invention concerne un procédé pour élaborer une image numérique. Ladite image numérique peut, à titre d'exemple non limitatif, être élaborée à partir de l'image naturelle de la scène d'étude et comporter, à titre d'exemple non limitatif, une zone de texte associée à une méta-information caractérisant un objet représenté sur l'image numérique, telle que par exemple un nom dudit objet, sa taille, sa position relative à d'autres objets, etc.

À titre d'exemple d'application préféré mais non limitatif, l'invention sera décrite au travers d'une lunette astronomique dont un objectif capture une scène d'étude correspondant à une portion de la voûte céleste, c'est-à-dire une portion comportant des objets astronomiques, tels que, à titre d'exemples non limitatifs, des étoiles, des planètes, des galaxies et/ou des nébuleuses.

Dans la suite du document, nous entendrons par « système optique » tout système permettant de capturer des rayons lumineux émis par un objet puis de former et de restituer une image naturelle grâce à un ensemble d'éléments optiques, tels que des miroirs, des lentilles, etc. Nous nommerons « image naturelle », également qualifiée d' « image réelle », toute image n'ayant pas subi une transformation électronique et « image numérique » la représentation numérique d'une image naturelle, c'est-à-dire une image ayant subi une transformation électronique. On entend par « objet » ou « objet astronomique », tout objet observable par un système optique, tel qu'à titre d'exemples non limitatifs un astre, une étoile, une planète, un avion, un satellite, un animal, une constellation d'étoiles, etc.

L'Homme a de tout temps observé le ciel. À l'œil nu, il a observé les étoiles et les planètes. Il a ainsi pu déterminer leurs positions relatives, définissant ainsi des constellations, c'est-à-dire des groupements d'étoiles présentant une figure ou un motif constant, tel qu'à titre d'exemple, la « grande ourse » composée de sept étoiles. Après l'invention de la lunette astronomique et du télescope, l'Homme a pu observer davantage d'objets astronomiques, certains se trouvant même en dehors du système solaire, comme par exemple des nébuleuses ou des galaxies. Ces objets astronomiques n'étant pas visibles à l'œil nu, il est difficile pour un astronome non confirmé d'orienter correctement son système optique vers la voûte céleste afin de les observer. En effet, plusieurs critères doivent être réunis. Premièrement, le système optique doit être performant, c'est-à-dire avoir une ouverture et un grossissement adaptés. Ensuite, les conditions d'observation doivent être optimales, c'est-à-dire qu'il faut un ciel ne présentant pas ou peu de pollution lumineuse, afin de pouvoir capturer principalement la lumière issue des objets astronomiques. Enfin, l'utilisateur doit s'armer de patience et disposer d'informations nécessaires quant à la localisation des objets astronomiques à observer. Un astronome débutant, n'arrivant pas à orienter son système optique correctement, peut dès lors être rapidement déçu et abandonner l'observation de la voûte céleste.

Pour faciliter la recherche des objets astronomiques, certains systèmes optiques ont été motorisés. C'est par exemple le cas de certains télescopes. Un tel télescope comporte généralement un système électronique embarqué, permettant à un utilisateur de renseigner l'objet astronomique recherché. Le télescope pointe alors automatiquement vers ce dernier à l'aide d'un moteur orientant correctement ledit télescope. Ainsi, l'utilisateur peut directement observer l'objet astronomique souhaité. Néanmoins, de tels systèmes optiques requièrent une procédure d'alignement polaire fastidieuse et/ou l'adjonction d'une caméra à très grand champ parallèlement au télescope principal afin de réaliser un tel alignement automatiquement. En outre, certains astronomes demeurent attachés à l'aspect « recherche de l'objet astronomique » et ne souhaitent pas rester ainsi passifs dans leur quête d'observation. De plus, un tel télescope bien qu'éventuellement motorisé peut restituer une image naturelle de l'objet astronomique observé décevante pour un astronome. Par exemple, un tel système peut restituer une masse grisée représentant une nébuleuse. En effet, certains objets astronomiques se trouvant à plusieurs années lumières de la Terre, la quantité de lumière capturée par le système optique peut être limitée. L'image naturelle restituée par ledit système peut dès lors ne pas correspondre aux attentes de l'utilisateur, ce dernier comparant le résultat de son observation avec des images d'objets astronomiques observés par des super-télescopes, tels que le télescope Hubble, par exemple. De plus, la faible qualité de l'image naturelle restituée par le système optique peut induire en erreur l'utilisateur durant son observation. En effet l'image observée, de par sa faible résolution et/ou son faible contraste et sa faible luminosité, peut empêcher un utilisateur d'identifier un objet astronomique observé. Enfin, l'utilisateur peut faire des erreurs quant à l'orientation de son système optique et pointer vers un objet astronomique distinct de celui initialement recherché, entraînant ainsi des erreurs d'interprétation.

Pour améliorer la qualité de l'image restituée par des systèmes optiques, certains télescopes sont équipés d'un système de réalité augmentée, tel qu'à titre d'exemple, le système décrit dans le document DE 10 2005 025 048. Un tel système capture une partie de la lumière d'une scène observée pour créer une image numérique de ladite scène observée, par exemple, au moyen d'une première lame semi-réfléchissante et d'un capteur matriciel. L'image numérique ainsi créée est comparée à une base de données contenant des images de hautes résolutions d'objets astronomiques couramment observés. À l'aide d'un procédé de reconnaissance et de comparaison d'image, la zone pointée peut dès lors être identifiée. Une image en haute résolution correspondant à la scène observée peut être restituée dans le système optique, son observation se faisant au travers d'un oculaire. Selon certaines variantes, cette image peut être complétée d'informations additionnelles caractérisant un objet astronomique particulier. À l'aide d'une deuxième lame semi-réfléchissante, l'image en haute résolution et l'image naturelle sont conjuguées et restituées simultanément à l'utilisateur par le système optique. Ce système présente toutefois l'inconvénient majeur de réduire considérablement la luminosité de l'image naturelle restituée à l'utilisateur par l'emploi de deux lames semi-réfléchissantes, altérant ainsi la perception naturelle de l'objet astronomique observé. De plus, l'utilisateur d'un tel système perçoit davantage l'image en haute résolution que l'image naturelle, altérant ainsi son observation et son appréciation. En outre, de tels systèmes présentent un temps de traitement élevé, du fait notamment de la mise en œuvre d'une série de comparaisons de la scène observée avec de nombreuses images stockées au sein de la base de données. Durant ce traitement particulièrement chronophage, un objet astronomique observé peut alors sortir du champ de vision du système optique, l'image naturelle et l'image en haute résolution sélectionnée n'offrant plus de correspondance. En effet, du fait de la rotation de la Terre, le système optique est constamment en mouvement par rapport à la voûte céleste, ladite correspondance ne pouvant alors être parfaitement corrigée que par des montures motorisées très coûteuses et très précises. L'emploi de deux lames séparatrices est non seulement coûteux, à l'acquisition et durant la maintenance du système, mais rajoute également des contraintes de poids dans la monture d'un tel télescope pouvant, même créer un déséquilibre de celui-ci durant son utilisation.

Les documents US 2016/0109695 A1 et LINTU, A. An Augmented Reality System for Astronomical Observations. Virtual Reality,2006. IEEE Alexandria, VA, USA 25-29 MARCH 2006, PISCATAWAY, NJ, 25 MARS 2006 (2006-03-25), XP010912069, DOI: 1.1109/VR.2006.24

ISBN: 978-1-4244-0224-3
décrivent un système optique selon le préambule de la revendication 1.

L'invention permet de répondre à tout ou partie des inconvénients soulevés par les solutions connues. Parmi les nombreux avantages apportés par l'invention, nous pouvons mentionner qu'un système conforme à l'invention permet de conserver une grande partie de la lumière capturée par le système optique et ainsi de restituer une image naturelle présentant une excellente luminosité, de par notamment l'utilisation préférée d'une seule lame semi-réfléchissante. L'invention permet aussi d'identifier l'objet astronomique observé plus rapidement. L'utilisateur est ainsi renseigné de manière ergonomique durant tout le temps de l'observation. Nous pouvons mentionner que l'invention permet également de procurer un confort d'observation à l'utilisateur, celui-ci étant simplement guidé et informé quant à l'objet astronomique observé de manière rapide et intuitive. La restitution d'une scène d'étude à un utilisateur n'est pas perçue de manière artificielle, car celle-ci est élaborée à partir de l'image naturelle capturée, ladite restitution permettant de surcroît d'observer des phénomènes et objets transitoires ou nouveaux. De manière collaborative, un système optique conforme à l'invention propose un procédé d'enrichissement d'une base de données de localisation permettant in fine de délivrer des méta-informations en lien avec une scène étudiée, lorsqu'un nouvel objet astronomique a été identifié. Un tel procédé conforme à l'invention permet à un utilisateur, éventuellement débutant, de collecter des images fiables, précisément identifiées et associées à des méta-informations, lesdites images correspondant à des scènes d'études d'intérêt scientifique.

L'invention prévoit enfin une aide au pointage d'une scène désirée tout en laissant à l'utilisateur la possibilité de mettre en œuvre sa recherche d'objets astronomiques tout en étant accompagné, guidé et conseillé s'il le souhaite.

À cette fin, il est notamment prévu un système optique selon la revendication 1.

Selon un mode de réalisation préféré mais non limitatif, pour conserver une grande partie de la lumière capturée par le système optique et ainsi de superposer à l'image numérique une image naturelle présentant une excellente luminosité, un système optique conforme à l'invention peut comporter une lame semi-réfléchissante positionnée au sein du corps creux pour réfléchir un premier sous-ensemble de rayons lumineux entrants vers la face active desdits moyens de capture et transmettre un deuxième sous-ensemble de rayons lumineux entrants vers l'oculaire, ladite lame semi-réfléchissante étant en outre agencée pour transmettre et réfléchir des premier et deuxième sous-ensembles desdits rayons lumineux projetés respectivement vers la face active des moyens de capture et l'oculaire. En outre, les faces actives respectives des moyens de capture et des moyens de restitution peuvent se faire face et être agencées de part et d'autre de la lame semi-réfléchissante, lesdites faces actives étant traversées par un axe transversal virtuel du corps creux perpendiculaire à un axe longitudinal virtuel dudit corps creux et traversant le centre de la lame semi-réfléchissante.

Pour limiter la capture de rayons lumineux projetés par les moyens de restitution et transmis par la lame semi-réfléchissante, le corps creux du système optique peut comporter un polariseur agencé entre les moyens de capture et lesdits moyens de restitution, ledit polariseur étant traversé par l'axe transversal virtuel.

En variante ou en complément, le corps creux du système optique peut comporter une lentille d'imagerie pour constituer une image à partir des rayons lumineux projetés, agencée entre les moyens de restitution (25) et la lame semi-réfléchissante, ladite lentille étant traversée par l'axe transversal virtuel.

De manière avantageuse, afin d'offrir à une pluralité d'utilisateurs, éventuellement géographiquement distants, la possibilité de collaborer, de transmettre et d'échanger le fruit de leurs découvertes ou observations, un système optique conforme à l'invention peut en outre comporter des moyens de communication coopérant avec l'unité de traitement, agencés pour réceptionner un message de transmission émis depuis une entité tierce, l'unité de traitement étant agencée pour :
- décoder un message de transmission émis par ladite entité tierce, ledit message de transmission encodant des données caractéristiques d'un motif déterminé, des données de localisation et une méta-information associées audit motif ;
- inscrire dans la mémoire de données lesdites données caractéristiques d'un motif déterminé, lesdites données de localisation et ladite méta-information associées audit motif déduites dudit message de transmission.
En variante ou en complément, les moyens de communication d'un système optique conforme à l'invention peuvent être agencés pour émettre un message de découverte et l'unité de traitement dudit système optique peut être en outre agencée pour :
- élaborer ledit message de découverte, de sorte que celui-ci encode les images et les données de positionnement de la scène d'étude dans la voûte céleste ;
- déclencher l'émission dudit message de découverte par les moyens de communication pour requérir auprès d'une entité tierce des données caractéristiques d'un motif déterminé par lesdites données de positionnement de la scène d'étude et une méta-information en lien avec ledit motif déterminé.

De plus, un système optique conforme à l'invention, peut en outre comporter des moyens de communication coopérant avec l'unité de traitement, agencés pour réceptionner un message de découverte, l'unité de traitement étant agencée pour :
- rechercher dans la mémoire de données des données caractéristiques d'un motif déterminé par lesdites données de positionnement de la scène d'étude déduites dudit message de découverte et des données caractéristiques d'un motif déterminé, des données de localisation et une méta-information associées audit motif ;
- élaborer un message de transmission pour encoder lesdites données caractéristiques d'un motif déterminé, lesdites données de localisation et ladite méta-information associées audit motif ;
- déclencher l'émission dudit message de transmission par lesdits moyens de communication.

Également, en variante ou en complément, un système optique conforme à l'invention, peut en outre comporter des moyens de communication coopérant avec l'unité de traitement, agencés pour réceptionner un message de découverte, l'unité de traitement étant agencée pour :
- décoder ledit message de découverte, ledit message de découverte comportant des données de positionnement d'une scène d'étude dans la voûte céleste ;
- rechercher dans la mémoire de données des données caractéristiques d'un motif déterminé par lesdites données de positionnement de la scène d'étude déduites dudit message de découverte et des données caractéristiques d'un motif déterminé, des données de localisation et une méta-information associées audit motif ;
- élaborer un message de transmission pour encoder lesdites données caractéristiques d'un motif déterminé, lesdites données de localisation et ladite méta-information associées audit motif ;
- déclencher l'émission dudit message de transmission par lesdits moyens de communication.

Selon un deuxième objet, l'invention prévoit un procédé d'élaboration d'une image numérique selon la revendication 9.

Pour pouvoir déterminer la localisation de la scène d'étude, l'unité de traitement peut en outre coopérer avec des moyens pour déterminer les données de positionnement de la scène d'étude dans la voûte céleste et l'enregistrement au sein de la mémoire de données associé au motif déterminé peut comporter en outre des données de localisation dudit motif déterminé dans la voûte céleste. Le procédé peut dès lors comporter, préalablement à l'étape pour rechercher dans la mémoire de données un enregistrement associé à un motif proche du motif caractéristique détecté :
∘ une étape pour collecter des données de localisation produites par lesdits moyens pour déterminer la localisation de la scène d'étude et déterminer à partir desdites données de localisation et estimer des données de positionnement de la scène d'étude dans la voûte céleste ;
∘ une étape pour extraire d'un premier enregistrement de la mémoire de données, des données de localisation et calculer la distance entre lesdites données de localisation extraites et les données de positionnement de ladite scène d'étude dans la voûte céleste ;
∘ une étape pour attester de la proximité d'un motif associé aux données de localisation extraites de la scène d'étude si ladite distance calculée est inférieure à un seuil prédéterminé ;
∘ ladite étape pour rechercher dans la mémoire de données un enregistrement associé à un motif proche du motif caractéristique détecté, étant mise en œuvre si et seulement si l'étape pour attester de la proximité du motif associé aux données de localisation extraites de la scène d'étude, atteste d'une telle proximité.

Pour favoriser la détection de motifs au sein d'une représentation numérique produite, le procédé peut comporter, préalablement à l'étape pour analyser ladite représentation numérique produite par les moyens de capture, une étape pour réduire le bruit et/ou améliorer le contraste de la représentation numérique.

Pour accroître le contraste et/ou réduire le bruit de la représentation numérique in fine analysée, le procédé peut comporter, préalablement à l'étape pour analyser ladite représentation numérique :
- une étape pour déclencher l'acquisition de plusieurs représentations numériques successives par les moyens de capture ;
- une étape pour élaborer une seule représentation numérique à partir desdites représentations numériques successives.

Pour éliminer tout bruit ou parasite provenant de la restitution d'une image numérique par les moyens de restitution lors de la capture des rayons entrants et réfléchis par les moyens de capture, le procédé peut comporter :
- une étape pour enregistrer, à l'issue de l'étape pour restituer par les moyens de restitution l'image numérique, ladite image numérique dans la mémoire de données ;
- une étape préalable à l'étape pour analyser la représentation numérique, pour extraire de ladite mémoire de données l'image numérique issue de la restitution précédente, et soustraire ladite image numérique de la représentation numérique de la scène d'étude courante.

Pour partager notamment la découverte d'un motif nouveau détecté au sein d'une représentation numérique, l'unité de traitement d'un système optique selon l'invention peut en outre coopérer avec des moyens de communication pour communiquer avec une entité tierce.

Un procédé d'élaboration d'une image numérique conforme à l'invention peut en outre comporter une étape pour élaborer un message de découverte à destination de l'entité tierce comportant les données de positionnement de la scène d'étude et déclencher l'émission dudit message de découverte, si l'étape pour rechercher dans la mémoire de données un enregistrement associé à un motif proche du motif caractéristique détecté n'a pas abouti.

Dans le procédé d'élaboration d'une image numérique conforme à l'invention l'étape pour déclencher la capture des rayons lumineux entrants issus de ladite scène d'étude par les moyens de capture et produire une représentation numérique de ladite scène d'étude, peut être mise en œuvre de sorte à capturer une scène d'étude désignées par des données de positionnement de ladite scène d'étude dans la voûte céleste.

D'autres caractéristiques et avantages apparaîtront plus clairement à la lecture de la description qui suit se rapportant à un exemple de réalisation donné à titre indicatif et non limitatif et à l'examen des figures qui l'accompagnent parmi lesquelles :
- la figure 1 décrit un exemple de réalisation préféré mais non limitatif d'un système optique conforme à l'invention ;
- la figure 2 décrit le cheminement de rayons lumineux dans un système optique conforme à l'invention lors de l'observation d'une scène d'étude ;
- la figure 3 décrit un organigramme fonctionnel d'un procédé d'élaboration d'une image numérique conformément à l'invention.

À titre d'exemple d'application préféré mais non limitatif, l'invention sera décrite au travers d'une application relative à l'observation d'une scène d'étude S par un système optique 10 conforme à l'invention, ladite scène S comportant à titre d'exemple non limitatif des objets astronomiques O1, 02, un tel système consistant en un télescope ou une lunette astronomique particulièrement intuitif et ergonomique. Lesdits objets astronomiques 01 et 02 sont avantageusement des objets émettant des rayons lumineux.

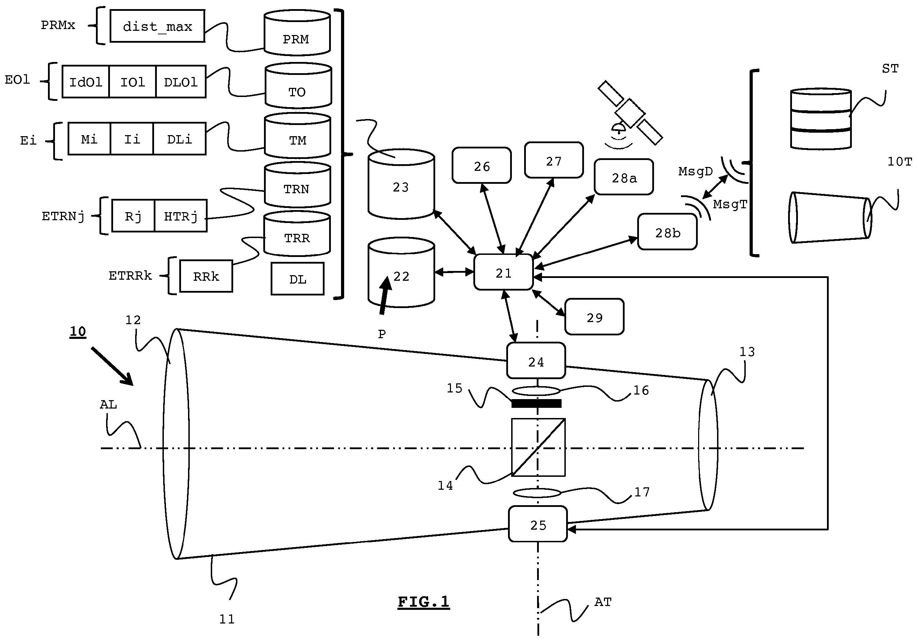

La figure 1 permet de présenter un exemple préféré mais non limitatif d'un système optique 10 conforme à l'invention. Un tel système optique 10 comporte un corps creux 11, par exemple un cylindre creux, comportant à l'une de ses extrémités un objectif 12 pour collecter des rayons lumineux émis par des objets astronomiques 01, 02 observés. À titre d'exemples non limitatifs, un tel objectif 12 peut consister en une simple ouverture, comme par exemple dans un télescope. En variante ou en complément, un tel objectif 12 peut comprendre une lentille, comme il est d'usage par exemple dans une lunette astronomique ou pour des jumelles. Le corps creux 11 d'un système optique 10 conforme à l'invention comporte en outre un oculaire 13 pour restituer à un utilisateur, l'image naturelle formée par le système optique 10. À titre d'exemples non limitatifs, un tel oculaire 13 peut consister en une lentille ou tout autre moyen équivalent.

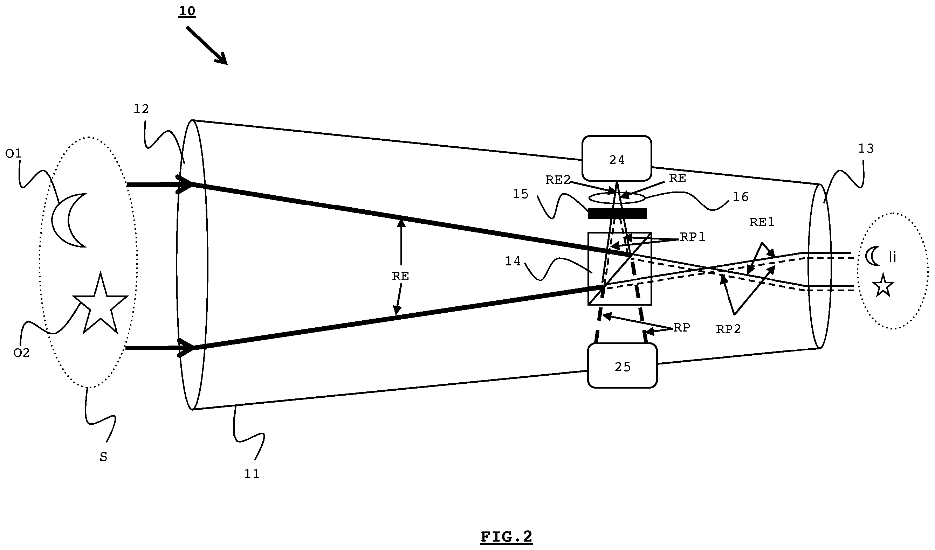

Un tel corps creux 11 comporte en outre un moyen 14 pour séparer un ensemble de rayons lumineux RE entrant dans le système via l'objectif 12 en deux sous-ensembles RE1 et RE2. Un tel moyen 14 peut consister, à titre d'exemples non limitatifs, en un séparateur de faisceau, une lame semi-réfléchissante, un cube polarisant, une lame polarisante, un miroir semi-réfléchissant ou tout autre instrument optique permettant de réfléchir une partie des rayons lumineux et transmettre l'autre partie. À des fins de simplification, dans la suite du document, nous nommerons « lame semi-réfléchissante » un tel moyen 14. Le rôle d'une telle lame semi-réfléchissante 14 peut dès lors consister à transmettre un premier sous-ensemble de rayons lumineux entrants RE1 vers l'oculaire 13 et réfléchir un deuxième sous-ensemble de rayons lumineux entrants RE2, tel que représenté en figure 2 par des traits pleins.

Le système optique 10 comporte en outre des moyens de capture 24 agencés dans le corps creux 11 et coopérant avec une unité de traitement 21. Cette dernière est chargée d'élaborer une image numérique comportant une méta-information caractérisant ou mettant en exergue un ou des objets présents dans une scène d'étude S. Lesdits moyens de capture 24 peuvent, à titre d'exemple, consister en un capteur matriciel et produire une représentation numérique Rj d'une image naturelle produite par le système optique 10, ladite image naturelle étant constituée des rayons lumineux RE2 entrants et réfléchis sur la lame semi-réfléchissante 14. Lesdits rayons sont dès lors capturés par les moyens de capture 24 au moyen de leur face active. La représentation numérique Rj délivrée par un tel capteur peut consister en un tableau de pixels, chaque pixel encodant une nuance de gris, une intensité lumineuse, ou une couleur. La représentation numérique Rj est ensuite enregistrée dans des moyens de mémorisation 23, également qualifiés de mémoire de données 23, coopérant avec l'unité de traitement 21. Selon un mode de réalisation, l'enregistrement d'une donnée temporelle t, caractérisant la période courante d'acquisition ou de capture, peut être conjointement réalisée avec celui de la représentation numérique Rj. Une telle représentation numérique Rj peut être exploitée pour détecter et identifier des objets astronomiques lors de l'observation de la voûte céleste. Une telle détection peut s'effectuer par des méthodes de détection connues, comme nous le verrons ultérieurement. Ladite unité de traitement 21 peut en outre être exploitée pour élaborer une image numérique caractérisant ou mettant en exergue des objets détectés dans la scène d'étude S. Les moyens de capture 24 peuvent être directement connectés par bus filaire à ladite unité de traitement 21, de tels bus étant représentés par des doubles flèches en figure 1, ou en variante, distants de ladite unité de traitement 21 et coopérer avec ladite unité de traitement 21 via une liaison sans fil, tel qu'à titre d'exemple non limitatif, par la mise en œuvre d'un protocole de communication de proximité, tel qu'un protocole Bluetooth.

Pour pouvoir élaborer une image numérique, l'unité de traitement 21 comporte avantageusement un ou plusieurs microcontrôleurs ou microprocesseurs coopérant, par couplage et/ou par bus filaire, avec des moyens de mémorisation de données 23 et/ou de programmes 22, également et respectivement qualifiés de mémoires de données 23 et/ou de programmes 22. De tels moyens de mémorisation 22, 23 peuvent consister, par exemple, en une ou plusieurs mémoires non volatiles distinctes. La mémoire de programmes 22 permet de stocker notamment des instructions d'un programme P qui, lorsqu'elles sont exécutées ou interprétées par ladite unité de traitement 21, déclenchent la mise en œuvre d'un procédé déterminé pour élaborer une image numérique. Une ou plusieurs mémoires de données 23 coopérant avec ladite unité de traitement 21 sont structurées pour enregistrer des données nécessaires à la mise en œuvre d'un tel procédé pour élaborer une image numérique conforme à l'invention.

La ou les mémoires de données 23 sont généralement électriquement effaçables et inscriptibles. À titre d'exemples non limitatifs, des données peuvent y être enregistrées dans des tables ou des structures de données chaînées, comportant chacune un ou plusieurs enregistrements. Une première structure TM peut comporter un ou plusieurs enregistrements Ei, i étant un entier compris entre 1 et n, n étant un entier déterminé, respectivement dédiés ou associés à un ou plusieurs motifs déterminés par des données caractéristiques Mi sous la forme par exemple d'un poly-vecteur et comportant une méta-information Ii caractérisant ledit motif. Par abus de langage, nous nommerons un motif déterminé Mi en lieu et place desdites données le caractérisant. Une deuxième structure TO peut comporter un ou plusieurs enregistrements EOl, 1 étant un entier compris entre 1 et r, r étant un entier déterminé, respectivement dédiés ou associés à un ou plusieurs objets astronomiques 01 observables. Une troisième structure de données TRN peut comporter un ou plusieurs enregistrements ETRNj, j étant un entier compris entre 1 et m, m étant un entier déterminé, respectivement associés à une ou plusieurs représentations numériques Rj d'une image naturelle capturée. Une quatrième structure TRR peut comporter un ou plusieurs enregistrements ETRRk, k étant un entier compris entre 1 et p, p étant un entier déterminé, respectivement associés et à une ou plusieurs représentations numériques d'images restituables RRk. Les différentes structures précédemment citées peuvent, en variante, ne constituer qu'une seule entité logique et leurs agencements respectifs ne sauraient constituer une quelconque limitation de l'invention.

Par ailleurs, chaque enregistrement ETRNj associé à une représentation numérique Rj peut être avantageusement agencé pour mémoriser un tableau de pixels dont chaque pixel encode une valeur de nuance de gris, de couleur ou d'intensité lumineuse. Un tel enregistrement peut en outre comporter une valeur caractérisant l'horodatage HTRj de la période de capture des rayons lumineux RE1. En outre, chaque enregistrement ETRRk associé à une représentation numérique d'image restituable, c'est-à-dire restituée ou prête à être restituée, peut être agencé pour mémoriser un tableau de pixels, dont chaque pixel encode une valeur de nuance de gris, de couleur ou d'intensité lumineuse, ladite image restituable étant élaborée à partir de l'image naturelle capturée et d'une méta-information caractérisant un motif ou un objet présent dans la scène d'étude S. Chaque enregistrement EOl associé à un objet astronomique peut également être agencé pour mémoriser des données propres à ce dernier, telles qu'à titre d'exemples un identifiant d'objet IdOl, des données de localisation DLOl et une ou plusieurs méta-informations 101 permettant de caractériser un tel objet. Lesdites données de localisation DLOl peuvent consister en des coordonnées de déclinaison et d'ascension droite de l'objet considéré. De telles méta- informations peuvent, à titre d'exemples non limitatifs, consister en le nom de l'objet, sa masse, son éloignement par rapport à la Terre, en un ou plusieurs identifiants ou encore noms de motifs auxquels il peut appartenir, etc. Enfin, chaque enregistrement Ei associé à un motif Mi peut être agencé pour mémoriser des données pour caractériser un tel motif Mi, telles qu'à titre d'exemples des données de localisation DLi du motif Mi dans la voûte céleste et une ou plusieurs méta- informations Ii permettant de caractériser un tel motif. Un tel enregistrement Ei peut, à titre d'exemples non limitatifs, comporter des coordonnées du centre dudit motif, des coordonnées ou des identifiants d'objets astronomiques qui le composent, et/ou des coordonnées de vecteurs s'étendant du centre dudit motif vers lesdits objets astronomiques.

En outre, les moyens de mémorisation 23 peuvent comporter avantageusement un champ PRMx, x étant un entier compris entre 1 et y, y étant un entier déterminé, par exemple dans une structure de données de paramètres PRM, pour enregistrer une valeur prédéterminée d'une distance dist_max caractérisant une zone de proximité autour de tout objet astronomique. Cette distance peut dès lors être utilisée pour déterminer la proximité d'un premier objet astronomique par rapport à un deuxième objet astronomique.

Pour restituer une image numérique RRk élaborée par l'unité de traitement 21, le corps creux 11 d'un système optique 10 conforme à l'invention comporte des moyens de restitution 25 coopérant avec ladite unité de traitement 21 et présentant une face active, projetant ladite image. Lesdits moyens de restitution 25 peuvent, par exemple, consister en un projeteur d'image ou un écran, par exemple de type OLED (Organic Light Emitting Display selon une terminologie anglo-saxonne), et restituer des rayons lumineux projetés RP en direction de la lame semi- réfléchissante 14, tel que représenté en figure 2 par des traits discontinus. Cette dernière transmet ainsi un premier sous-ensemble de rayons projetés RPl en direction des moyens de capture 24 et réfléchit un deuxième sous-ensemble de rayons projetés RP2 en direction de l'oculaire 13. Les moyens de restitution 25 peuvent alors être directement connectés par bus filaire à ladite unité de traitement 21 ou, en variante, être physiquement distants de ladite unité de traitement 21 et coopérer avec celle-ci via une liaison sans fil, par exemple selon un protocole de communication de proximité, tel qu'à titre d'exemple non limitatif, le protocole Bluetooth.

Pour capturer et restituer respectivement une image naturelle et une image numérique, ladite lame semi- réfléchissante 14, les moyens de capture 24 et les moyens de restitution 25 sont avantageusement agencés pour être disposés sur un axe transversal AT du corps creux 11, ledit axe transversal AT étant perpendiculaire à un axe longitudinal dudit corps creux, tels que représentés en figure 1 par les lignes discontinues AT et AL. Les faces actives desdits moyens de restitution 25 et des moyens de capture 24 sont dès lors orientées en miroir l'une par rapport à l'autre.

En variante ou en complément, pour créer une image à partir des rayons lumineux projetés RP, le corps creux 11 d'un système optique 10 conforme à l'invention peut en outre comporter une lentille 17 (non représentée en figure 2), dite « lentille d'imagerie », pour orienter et/ou converger les rayons lumineux projetés RP par les moyens de restitution 25 vers un point fixe déterminé, couramment appelé foyer. Ladite lentille est dès lors avantageusement positionnée entre lesdits moyens de restitution 25 et la lame semi-réfléchissante 14 sur l'axe transversal AT.

En variante ou en complément également, le corps creux 11 d'un système optique 10 conforme à l'invention peut comporter un polariseur 15 pour absorber lesdits rayons transmis RP1. Le rôle d'un tel polarisateur 15 consiste à éviter que tout ou partie des rayons lumineux projetés RP émis par les moyens de restitution 25, et plus particulièrement les rayons lumineux projetés et transmis RP1 par la lame semi-réfléchissante 14, soient capturés par les moyens de capture 24. Un tel polariseur 15 est avantageusement positionné entre la lame semi- réfléchissante 14 et les moyens de capture 24 sur l'axe transversal AT.

Pour augmenter la prise de vue et donc le nombre de rayons capturés RP2, le corps creux 11 d'un système optique 10 conforme à l'invention peut comporter une lame réductrice de focale 16 positionnée entre la lame semi-réfléchissante 14 et les moyens de capture 24 sur l'axe transversal AT.

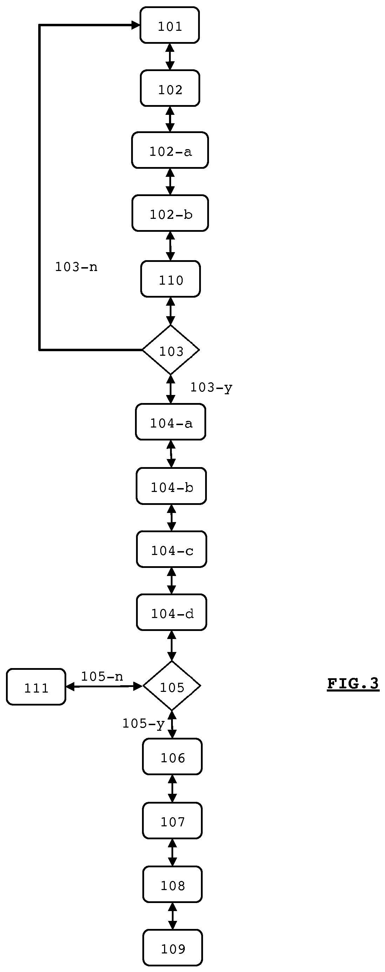

Selon une variante avantageuse mais non limitative de réalisation, l'invention prévoit que le système optique 10 peut en outre interagir avec des entités tierces ST, 10T. Un système optique 10 conforme à l'invention peut dès lors comporter des moyens de communication 28b, par exemple sous la forme d'un modulateur-démodulateur, coopérant avec l'unité de traitement 21, au moyen de bus filaires. Par l'intermédiaire desdits moyens de communication 28b et plus précisément de l'unité de traitement 21, le système optique 10 peut déclencher et/ou détecter respectivement l'émission et/ou la réception de messages à destination et/ou en provenance d'entités tierces 10T, ST positionnées à portée de communication. Si ledit système optique 10 coopère avec de telles entités tierces par voie de communication sans fil, lesdits éléments peuvent en outre coopérer par tout autre moyen apte à véhiculer lesdits messages. À titre d'exemples non limitatifs, de telles entités tierces peuvent consister en un serveur distant ST ou un deuxième système optique 10T. Selon l'invention, de tels messages peuvent consister, de manière non limitative, en des messages de découverte MsgD comportant les coordonnées d'un objet astronomique fraîchement, plus précisément les données de positionnement DP de la scène d'étude S et informant lesdites entités tierces de la découverte dudit nouvel objet astronomique. De façon plus générale, de tels messages peuvent comporter des coordonnées d'une scène à observer afin d'aider à caractériser, éventuellement de manière collaborative, un objet ou un phénomène astronomique. Comme nous le verrons plus tard en lien avec un exemple d'un procédé d'élaboration d'une image numérique mis en œuvre par l'unité de traitement d'un système optique 10 conforme à l'invention, tel que le procédé 100 décrit en lien avec la figure 3, l'exploitation de tels moyens de communication 28b offre à une pluralité d'utilisateurs, éventuellement géographiquement distants, la possibilité de collaborer, de transmettre et d'échanger le fruit de leurs découvertes et/ou observations, et ce, afin de participer à une observation ou collecte de données demandée par une entité tierce et/ou d'enrichir notamment les structures TO et/ou TM de différents systèmes optiques, permettant alors à tout ou partie des utilisateurs, de bénéficier de l'affichage de nouvelles méta-informations lors de l'observation d'une scène étudiée de la voûte céleste.

De manière avantageuse mais non obligatoire, un système optique 10 conforme à l'invention peut en outre comporter des moyens 26 et/ou 27 pour déterminer la localisation de la scène d'étude S dans la voûte céleste observée par un tel système optique 10. Lesdits moyens peuvent respectivement consister en des moyens 26 de localisation terrestre du système optique 10 et des moyens 27 pour déterminer l'orientation de l'objectif 12 dudit système optique 10.

Lesdits moyens 26 de localisation terrestre et/ou les moyens 27 de détermination de l'orientation de l'objectif 12 du système optique 10 peuvent notamment coopérer, par l'intermédiaire de l'unité de traitement 21, avec des moyens de communication 28a, de tels moyens de communication 28a étant alors agencés pour communiquer avec un système de navigation et de localisation par satellite, par exemple GPS « Global Positioning System » selon une terminologie anglo-saxonne. Selon ce mode de réalisation avantageux, l'unité de traitement 21 est ainsi chargée de récolter des données transmises par le système GPS et réceptionnées par les moyens de communication 28a et en conséquence, ladite unité de traitement 21 connaît exactement la portion de la voûte céleste observée. En variante, de telles données de localisation de la scène d'étude au regard de la voûte céleste peuvent être renseignées par un utilisateur U. Dans ce cas, ledit système optique 10 peut comporter une interface homme-machine de consigne, coopérant avec l'unité de traitement 21 par couplage et/ou par bus filaire, permettant à l'utilisateur de saisir les coordonnées géographiques de son emplacement, par exemple, sous la forme d'une latitude, d'une longitude et/ou d'une altitude et/ou un horodatage.

Lesdits moyens 27 pour déterminer l'orientation de l'objectif 12 dudit système optique 10 peuvent comporter, à titre d'exemples non limitatifs, un compas, un magnétomètre, une boussole, un accéléromètre et/ou tout autre moyen pour déterminer l'orientation de l'objectif 12 coopérant avec l'unité de traitement 21, et produisant respectivement des données qui, prises unitairement ou conjointement, constituent des données permettant de déterminer l'orientation de l'objectif 12 et du système optique. Les données collectées à partir des moyens de localisation 26 et des moyens 27 pour déterminer l'orientation de l'objectif 12 seront dénommées « données de localisation DL » dans la suite du document. De telles données de localisation DL peuvent faire l'objet d'une inscription au sein des moyens de mémorisation 23. Conjuguées, lesdites données de localisation DL permettent d'estimer des données de positionnement DP de la scène d'étude S, permettant ainsi de déterminer précisément la portion de la voûte céleste, c'est-à-dire scène d'étude S observée par ledit système optique 10. La connaissance de telles données de localisation DL peut être exploitée conformément à un procédé d'élaboration d'une image numérique mis en œuvre par l'unité de traitement d'un système optique 10 conforme à l'invention, tel que le procédé 100 décrit en lien avec la figure 3, afin de réduire la recherche, au sein de la structure TM, aux seuls enregistrements Ei pertinents respectivement associés à des motifs déterminés Mi dans ladite portion de la voûte céleste observée. En effet, les enregistrements Ei peuvent comporter chacun la valeur de données de localisation DLi d'un motif Mi déterminé pertinent au regard de la scène d'étude S. Ainsi, bien que la structure TM puisse comporter un très grand nombre d'enregistrements Ei, la recherche des motifs Mi pertinents n'engendrera qu'une exploitation minimale d'enregistrements Ei au sein de ladite structure. La reconnaissance de motifs d'intérêt sur un champ d'observation réduit est par conséquent rendue possible de manière rapide et intuitive, voire quasiment en temps réel, pour toute unité de traitement 21, quand bien même cette dernière ne dispose que de capacités de traitement réduites ou modestes.

Selon une autre variante de l'invention, un système optique 10 conforme à l'invention peut en outre comporter des moyens 29 pour détecter un mouvement du corps creux 11, tels qu'à titre d'exemple non limitatif, un gyroscope. Une interprétation par l'unité de traitement 21 de données produites par de tels moyens, peut permettre à celle-ci d'interrompre ou de débuter la mise en œuvre de traitements ou procédés conformes à l'invention mis en œuvre par ledit système optique 10, plus particulièrement des étapes de recherche et/ou de reconnaissance de motifs déterminés éventuellement pertinentes, décrites ultérieurement en lien avec l'exemple du procédé 100 illustré par la figure 3.

Enfin, en variante ou en complément, un système optique 10 conforme à l'invention peut avantageusement disposer d'une batterie ou plus généralement de toute source d'énergie électrique interne, afin d'y puiser l'énergie électrique nécessaire à son fonctionnement.

La figure 3 décrit un schéma fonctionnel d'un procédé 100 pour élaborer une image numérique conforme à l'invention.

Le procédé 100 peut être mis en œuvre itérativement et continuellement, c'est-à-dire, à titre d'exemples non limitatifs, toutes les secondes ou toutes autres périodes de temps prédéterminées. Selon une variante avantageuse mais non limitative, ledit procédé 100 peut être mis en œuvre de manière itérative, tant que les moyens 29 pour détecter un mouvement du corps creux 11 d'un système optique 10 conforme à l'invention renvoient une valeur caractérisant une immobilité temporaire du système optique, et/ou peut être interrompu lorsque lesdits moyens 29 pour détecter un mouvement renvoient une valeur traduisant une mise en mouvement du système optique 10. À titre d'exemple non limitatif, après une durée prédéterminée, voire paramétrable, d'immobilité du corps creux 11, par exemple de dix secondes, l'unité de traitement 21 peut automatiquement déclencher la mise en œuvre du procédé 100 pour élaborer une image numérique.

Pour illustrer l'apport de l'invention, étudions un cas selon lequel un système optique 10 observe une scène d'étude comportant un motif composé d'un ou plusieurs objets astronomiques 01, 02, tel qu'une nébuleuse par exemple.

En liaison avec la figure 3, un procédé 100 conforme à l'invention et mis en œuvre par l'unité de traitement 21 d'un système optique 10 tel que décrit en liaison avec la figure 1, comporte une première étape 101 pour déclencher la capture d'une scène d'étude S, située en vis-à-vis de l'objectif 12 et plus généralement du système optique 10, par les moyens de capture 24 dudit système d'optique 10. Ladite étape 101 consiste notamment à produire une représentation numérique Rj de la scène d'étude S. Les données ainsi produites sont mémorisées dans un enregistrement ETRNj d'une structure TRN dédiée au sein des moyens de mémorisation 23, par exemple sous la forme d'un tableau de pixels. Comme évoqué précédemment, une telle structure de données TRN peut comporter un ou plusieurs enregistrements ETRNj, j étant un entier compris entre 1 et m, m étant un entier déterminé, respectivement associés à une ou plusieurs représentations numériques Rj d'une image naturelle capturée.

Le procédé 100 comporte en outre une étape 103 pour analyser la teneur d'une représentation numérique Rj produite, afin de détecter la présence éventuelle d'un motif caractéristique, correspondant à un groupement d'objets astronomiques 01, 02 dans la scène d'étude S. Une telle étape 103 peut consister à analyser ladite représentation numérique Rj selon des méthodes connues, par exemple, en effectuant un seuillage de ladite représentation numérique Rj. Un tel seuillage peut, à titre d'exemple, consister à remplacer la valeur d'un niveau de gris, d'une intensité lumineuse ou d'une couleur associée à tout pixel par une valeur nulle, si ladite valeur est inférieure à une valeur de seuil prédéterminée, ou par une deuxième valeur prédéterminée de niveau de gris, d'intensité lumineuse ou de couleur dans le cas contraire. À titre d'exemple non limitatif, pour une image en deux cent cinquante-six niveaux de gris, la valeur de seuil prédéterminée peut être fixée à cent vingt-cinq. La détection d'un motif caractéristique consiste dès lors à observer si la représentation numérique Rj après seuillage comporte des pixels ayant une valeur non-nulle, caractérisant un objet de forte luminosité. Une autre technique de seuillage peut consister à calculer un histogramme de l'image, c'est-à- dire, à déterminer une distribution des intensités lumineuses des pixels de l'image. La détection d'un motif caractéristique peut alors consister à observer des pics sur ledit histogramme caractérisant un objet de forte luminosité.

Selon un mode de réalisation avantageux mais non limitatif de l'invention, une représentation numérique Rj doit avantageusement contenir un nombre prédéterminé et minimal d'objets astronomiques pour être efficacement exploitée. Par exemple, on a pu constater que la valeur un tel nombre prédéterminé et minimal peut avantageusement être définie égale à quatre. Ainsi, l'étape 103 peut consister en outre à déterminer si la scène d'étude S comporte suffisamment d'objets astronomiques pour être exploitée. Une telle détermination peut consister, à partir d'un seuillage de la représentation numérique Rj, à comptabiliser les zones de ladite représentation dont la valeur des pixels est non-nulle ou encore les pics d'histogramme caractérisant la présence de tels objets. Si ledit nombre d'objets comptabilisés est inférieur à la valeur dudit nombre prédéterminé, alors la mise en œuvre du procédé 100 consiste à déclencher une nouvelle capture des rayons lumineux RE issus de la scène S observée pour obtenir une nouvelle représentation numérique Rj, situation symbolisée par le lien 103-n en figure 3, en ajustant au préalable un ou plusieurs paramètres de capture des moyens de capture 24, par exemple, pour augmenter le temps de pose ou la durée d'exposition, afin de capturer davantage de rayons lumineux RE. De tels paramètres peuvent faire l'objet d'une inscription dans un champ de la structure de données de paramètres PRM précédemment mentionnée.

Lorsqu'un motif caractéristique est détecté dans la représentation numérique Rj, ledit procédé 100 comporte par ailleurs une étape 105 pour rechercher, dans les moyens de mémorisation 23, un enregistrement Ei associé à un motif Mi similaire ou ressemblant audit motif caractéristique détecté. Selon un exemple de réalisation avantageux, ladite étape 105 peut consister dès lors à générer à partir de la représentation numérique Rj un poly-vecteur, à titre d'exemple non limitatif un quadrivecteur, c'est-à-dire un vecteur à quatre dimensions avec quatre coordonnées décrivant quatre objets astronomiques. Un tel vecteur est caractérisé par un couple de coordonnées du centre de son champ permettant de le situer dans la voûte céleste. À titre d'exemple non limitatif, de telles coordonnées peuvent s'exprimer sous la forme d'un couple de valeurs caractérisant la déclinaison et l'ascension droite du centre du champ. Un quadrivecteur peut en outre être défini par des valeurs caractéristiques, telles que l'origine d'un référentiel défini à partir de deux des quatre objets astronomiques du motif et dont l'origine est le centre du champ et les coordonnées des deux autres objets astronomiques dans ledit référentiel. Ainsi, de telles valeurs caractéristiques peuvent être déterminées par la position relative des quatre objets astronomiques constituant le motif caractéristique. De cette manière, les proportions, l'orientation et la localisation du motif caractéristique peuvent être déterminées. L'étape 105 peut consister à rechercher dans une structure TM, dédiée aux motifs déterminés Mi et enregistrée dans les moyens de mémorisation 23, un enregistrement Ei associé, c'est-à-dire comportant, par exemple, un champ décrivant des données caractéristiques Mi par exemple sous la forme d'un quadrivecteur similaires à celles du quadrivecteur du motif caractéristique identifié au sein de la représentation numérique Rj.

Dans l'affirmative, c'est-à-dire lorsque l'étape 105 pour rechercher un enregistrement associé au motif caractéristique détecté atteste de la présence d'un tel enregistrement Ei comportant des données caractéristiques Mi similaires à celles du motif caractéristique identifié au sein de la représentation numérique Rj, situation symbolisée par le lien 105-y en figure 3, le procédé 100 comporte également une étape 106 pour extraire d'un tel enregistrement Ei les identifiants IdOl des objets astronomiques qui le composent, et rechercher dans la structure TO dédiée aux objets astronomiques des enregistrements EOl comportant lesdits identifiants IdOl. L'étape 106 consiste dès lors à extraire desdits enregistrements EOl des méta-informations 101 associées respectivement aux objets, par exemple leurs noms et leurs éloignements par rapport à la Terre. La conjonction ou union desdites méta-informations constitue une méta- information Ii associée au motif Mi. Selon une variante de réalisation, un enregistrement Ei d'une structure TM de motifs peut comporter directement un champ associé à la valeur d'une méta-information Ii caractérisant ledit motif Mi. Cette dernière méta-information peut donc être directement extraite à l'étape 106.

Un procédé 100 conforme à l'invention comporte en outre une étape 107 pour élaborer une image numérique RRk dont l'objectif est d'être restituée par les moyens de restitution 25 d'un système optique 10 selon l'invention et décrit à titre d'exemple non limitatif par la figure 1. Ladite étape 107 peut consister à élaborer ladite image RRk, de sorte que les valeurs respectives des pixels qui la composent soient équivalentes à celles des valeurs de la représentation Rj, à l'exception de certains pixels résultant d'une incrustation ou d'une insertion dans la représentation numérique Rj, de signes, de caractères ou de dessins, issus des méta-informations 101 et/ou Ii extraites en 106. Une telle étape 107 peut, à titre d'exemple non limitatif, consister à incruster une zone de texte selon des méthodes d'incrustation connues. En complément, l'image numérique RRk ainsi produite peut contenir toute sorte de symboles géométriques, tels que des cercles ou des flèches, permettant de mettre en exergue certains objets astronomiques.

Une fois l'image numérique RRk élaborée en 107, le procédé 100 comporte une étape 108 pour déclencher une restitution graphique de ladite image numérique RRk par lesdits moyens de restitution 25 d'un système optique 10 conforme à l'invention. Comme expliqué précédemment en liaison avec les figures 1 et 2, les rayons lumineux RP2 issus de la projection de ladite image numérique RRk se conjuguent aux rayons lumineux RE1 issus de l'observation de la scène d'étude S sous l'action de la lame semi-réfléchissante 14. Cette conjugaison est ensuite observable, via l'oculaire 13, par un utilisateur du système optique 10. Un tel utilisateur bénéficie alors d'informations additionnelles enrichissant l'image naturelle, fruit de son observation.

En variante ou en complément, un procédé 100 conforme à l'invention peut comporter une étape 109 pour enregistrer, à l'issue de l'étape 108 pour restituer par les moyens de restitution 25 l'image numérique RRk dans un enregistrement ETRRk de la structure TRR évoquée précédemment, dédiée aux images numériques restituables au sein des moyens de mémorisation 23 du système optique 10, à des fins d'historique par exemple.

L'image observable via l'oculaire 13 est d'ores et déjà d'excellente qualité et correspond en tout point à ce que l'utilisateur peut percevoir lors de son observation si le procédé 100 n'était pas mis en œuvre, à l'exception d'éléments additionnels incrustés.

Toutefois, pour améliorer davantage la vision de l'utilisateur, un procédé 100 selon l'invention peut comporter une étape optionnelle 110, préalable à l'étape 103 pour analyser la représentation numérique Rj, pour extraire de la structure TRR dédiée aux images restituables, l'image numérique RRk produite lors de l'itération précédente de la mise en œuvre du procédé 100 et soustraire, pixel par pixel, ladite image extraite de la représentation numérique Rj de la scène d'étude S courante. En effet, compte tenu de la configuration d'un système optique 10 conforme à l'invention, ladite représentation numérique Rj est le fruit de rayons lumineux RE2 (scène observée) et RP1 (image numérique projetée). Cette technique permet ainsi de filtrer ou de réduire l'apport desdits rayons RP1 dans la production finale de la représentation numérique Rj analysée à l'étape 103.

L'étape 105 testant la ressemblance d'un motif caractéristique détecté au sein d'une représentation numérique Rj peut être chronophage si la structure TM associée aux motifs déterminés Mi comporte de nombreux enregistrements Ei. En effet, un test de ressemblance peut être a priori totalement inutile si le motif caractéristique détecté dans une scène d'observation se trouve très éloigné spatialement dans la voûte céleste d'un motif Mi déterminé associé à un enregistrement Ei de ladite structure TM. Pour réduire le nombre de tests de ressemblance mis en œuvre à l'étape 105, le procédé 100 peut comporter, préalablement à ladite étape 105, une étape 104-a pour collecter la valeur des données de localisation DL produites à partir des données délivrées par les moyens 26, 27, 28a pour déterminer la localisation de la scène d'étude S d'un système optique 10 conforme à l'invention. Ladite étape 104-a peut consister à requérir auprès desdits moyens de localisation 26, le positionnement terrestre dudit système optique 10, à titre d'exemple non limitatif, en élaborant et encodant une requête de localisation vers un système de géolocalisation, tel qu'à titre d'exemple non limitatif, un système GPS. L'étape 104-a consiste donc à percevoir des données, par exemple sous la forme d'une ou plusieurs valeurs traduisant une longitude, une latitude et/ou une altitude dudit système optique 10. Lesdites données ainsi décodées peuvent dès lors être enregistrées dans les moyens de mémorisation 23. L'étape 104-a consiste en outre à collecter des données produites par les moyens 27 pour déterminer l'orientation de l'objectif 12. À titre d'exemple, ladite étape 104-a peut consister à collecter la valeur d'un angle entre le nord magnétique et un axe longitudinal AL du système optique 10, afin de déterminer l'orientation dudit système optique 10. Ledit angle peut être estimé par l'unité de traitement 21 du système optique 10 ou directement par les moyens 27, lorsque ceux-ci comportent un magnétomètre par exemple, puis être communiqué à ladite unité de traitement 21.

Le procédé 100 peut comporter dès lors une étape 104-b pour apprécier la localisation de ladite scène d'étude S dans la voûte céleste à partir des données de localisation DL précédemment récoltées. Connaissant la localisation terrestre du système 10 et l'orientation de l'objectif 12 de ce dernier, l'unité de traitement 21 peut déterminer, par la mise en œuvre de techniques connues, la portion de la voûte céleste observée et ainsi estimer des données de positionnement DP de ladite scène d'étude S.

Pour déterminer si un motif déterminé Mi associé à un enregistrement Ei de la structure TM est spatialement éloigné de la scène d'étude S, le procédé 100 peut comporter une première étape 104-c pour extraire dudit enregistrement Ei associé à un motif Mi, une donnée de localisation DLi et calculer une distance euclidienne entre le centre de champ du motif caractéristique détecté et la localisation théorique du motif Mi déduite des données DLi. Ledit procédé 100 peut en outre comporter une étape 104-d pour attester de la proximité d'un motif caractéristique détecté du motif déterminé Mi issu de la structure TM, si ladite distance euclidienne est inférieure ou égale à une distance prédéterminée dist_max caractérisant une zone de proximité autour de tout objet astronomique. Dans l'affirmative, le motif Mi est pertinent pour effectuer un test de ressemblance, l'étape 105 peut alors être mise en œuvre. Dans la négative, c'est-à-dire si ladite distance euclidienne est supérieure à ladite distance prédéterminée dist_max, un tel test serait non pertinent. Les étapes 104-c et 104d sont alors itérées avec un enregistrement distinct de la structure TM.

Pour améliorer la qualité de l'image numérique restituée RRk, l'invention prévoit une étape 102 optionnelle, préalable à l'étape 103 pour analyser la représentation numérique Rj. L'objet d'une telle étape 102 consiste in fine à améliorer la résolution de ladite représentation numérique Rj. En effet, lors d'une telle capture, les paramètres d'acquisition des moyens 24 de capture peuvent nécessiter d'être ajustés en fonction de propriétés du ciel au moment de l'observation, pour tenir compte par exemple d'une éventuelle pollution lumineuse, eu égard à l'environnement notamment. De plus, un système optique 10 conforme à l'invention, comportant des lentilles, peut provoquer des distorsions ou des aberrations sur l'image numérique produite RRk. L'invention prévoit que l'étape 102 peut dès lors consister à mettre en œuvre des méthodes et/ou techniques connues de correction d'image, telles qu'à titres d'exemples non limitatifs, une déconvolution de la fonction d'étalement du point (ou Point Spread Function selon une terminologie anglo-saxonne), voire une minimisation du flou. De plus, pour délivrer un rendu plus attractif à l'utilisateur, l'étape 102 peut en outre consister à améliorer les contrastes de l'image numérique produite RRk, afin de restituer par les moyens de restitution 25 une image plus contrastée.

Il est également possible de réduire le bruit et/ou d'améliorer l'intensité et le contraste de la représentation numérique Rj analysée en 103, par la mise en œuvre d'une étape optionnelle 102-a déclenchant la capture de plusieurs images numériques successives par les moyens de capture 24, selon des paramètres d'acquisition différents. Les différentes représentations numériques intermédiaires Rj produites peuvent enregistrées dans les moyens de mémorisation 23, par exemple dans une structure de données TRN prévue à cet effet. Une représentation Rj finale peut alors être produite pour être analysée en 103, par la mise en œuvre d'une étape 102-b pour créer ladite représentation numérique finale à partir desdites captures successives, par exemple, en moyennant la valeur de niveau de gris d'intensité lumineuse ou de couleur de chaque pixel à partir desdites captures successives. La Terre effectuant sans interruption une rotation sur elle même lors de l'observation d'objets astronomiques, ceux-ci semblent bouger jusqu'à sortir du champ de vision du système optique 10. L'étape 102-b peut dès lors consister à recaler les représentations numériques Rj intermédiaires avant de réaliser la moyenne des pixels de chacune d'elles par la mise en œuvre de toutes méthodes de recalage connues. On entend par « méthode de recalage » toute méthode permettant de superposer les pixels de deux représentations numériques différentes encodant un même objet mobile observé à des instants différents.

En variante ou en complément, selon une autre variante de l'invention, lorsque l'étape 105 pour rechercher, dans les moyens de mémorisation ou la mémoire de données 23, un enregistrement Ei associé au motif caractéristique détecté dans une représentation numérique Rj n'aboutit pas, situation symbolisée par le lien 105-n en figure 3, le procédé 100 peut mettre en œuvre une étape 111 pour élaborer un message de découverte MsgD à destination d'une entité tierce 10T, ST au travers des moyens de communication 28b. Ledit message MsgD peut comporter les données de positionnement DP de la scène d'étude S préalablement déterminées. Une telle entité tierce peut consister en un serveur distant ST par exemple ou un deuxième système optique 10T. Il est alors possible d'enrichir la liste des motifs déterminés Mi mise à la disposition d'une communauté d'astronomes et in fine inscrite dans les moyens de mémorisation 23 des systèmes 10 selon l'invention, par exemple sous la forme de structures TM. En effet, à réception d'un tel message de découverte MsgD, ladite entité tierce 10T, ST recherche des données caractéristiques d'un motif partageant des données de localisation sensiblement similaires aux données de positionnement DP contenues dans le message de découverte. Ladite entité tierce 10T, ST élabore et émet, à destination du système optique 10 requérant, un message de transmission MsgT encodant des données similaires à celles contenues dans un enregistrement Ei décrivant un tel motif partageant les données de localisation sensiblement similaires aux données de positionnement DP. L'étape 111 consiste alors à décoder un tel message de transmission MsgT et à créer, à partir des données issues dudit message de transmission MsgT, un nouvel enregistrement Ei dans la structure TM. Celle-ci se trouve collaborativement enrichi.

Ladite entité tierce pouvant être un système optique 10T conforme à l'invention, l'invention prévoit que le procédé 100 puisse comporter des étapes additionnelles visant respectivement à réceptionner un message de découverte MsgD et à élaborer et émettre un message de transmission MsgT. De telles étapes additionnelles consisteraient à titres d'exemples non limitatifs, à :
- décoder un message de découverte MsgD, ledit message de découverte MsgD comportant des données de positionnement DP d'une scène d'étude S dans la voûte céleste ; - rechercher dans la mémoire de données des données caractéristiques d'un motif déterminé par lesdites données de positionnement DP de la scène d'étude S déduites dudit message de découverte MsgD et des données caractéristiques d'un motif déterminé, des données de localisation DLi et une méta-information associées audit motif ;
- élaborer un message de transmission MsgT pour encoder lesdites données caractéristiques d'un motif déterminé, lesdites données de localisation DLi et ladite méta-information associées audit motif ;
- déclencher l'émission dudit message de transmission MsgT par lesdits moyens de communication 28b.

De tels recherche, élaboration et déclenchement d'un message de transmission MsgT peuvent en outre découler de la réception, par les moyens de communication 28b, d'une requête en information distincte, par exemple une requête en observation d'une portion de la voûte céleste émanant d'une entité tierce 10T, ST, en lieu et place d'une réponse à la réception d'un message de découverte MsgD. L'unité de traitement 21 pourra alors être agencée pour mettre en œuvre une étape, préalable à l'élaboration d'un message de transmission MsgT, pour procéder à la capture d'une scène d'étude S dont les données de positionnement DP dans la voûte céleste sont déduites d'une telle requête en observation. Ledit message de transmission MsgT pourra dans ce cas, en outre encoder la représentation numérique Rj ou l'image numérique RRk, fruit de ladite capture. Enfin, l'invention prévoit qu'une telle capture d'une scène d'étude S dont les données de positionnement DP dans la voûte céleste sont déduites d'une requête en observation puisse être mise en œuvre sans nécessairement être suivie d'une étape d'élaboration d'un message de transmission, dans le but de piloter un système optique comportant des moyens de pointage automatique, un ou plusieurs moteurs et/ou actionneurs, et/ou d'offrir à un utilisateur une procédure simplifiée et assistée d'une observation d'une portion déterminée par des données de positionnement dans la voûte céleste telle que, non limitativement, une aide au pointage d'une scène d'étude donnée.

L'invention prévoit également que les messages de découverte MsgD, de transmission MsgT et autres requêtes en information puissent en outre comporter ou encoder toute autre information complémentaire, telle qu'à titre d'exemples non limitatifs, des valeurs de paramètres relatives à une capture d'une portion de la voûte céleste, par exemple un temps de pose ou une sensibilité à la lumière des moyens de capture, une représentation numérique acquise ou une image produite.

Par ailleurs, selon une variante de l'invention, une image numérique RRk produite en 105 peut comporter un contenu graphique permettant d'indiquer, à l'utilisateur d'un système 10 conforme à l'invention dont une unité de traitement 21 met en œuvre un procédé 100 tel que décrit précédemment, qu'un objet astronomique d'intérêt se trouve à proximité de la scène d'étude S actuellement observée. Ledit contenu graphique, par exemple une flèche orientée, peut être mémorisé dans les moyens de mémorisation 23 et être restitué accompagné d'un contenu textuel indiquant la direction du positionnement dudit objet astronomique se trouvant à proximité de la scène S étudiée. L'utilisateur peut ainsi, s'il le souhaite, orienter son système optique pour observer une nouvelle scène comportant ledit objet. Une telle indication peut être encodée sous la forme d'une méta-information Ii associée à un motif Mi déterminé dans la structure TM ou à un objet astronomique comportant une structure mémoire TO telle que décrite précédemment.

L'invention a été décrite lors de son utilisation en lien avec des applications relatives à l'observation d'une scène d'étude correspondant à une portion de la voûte céleste par un système optique, tel que, non limitativement, un télescope ou une lunette astronomique. Au sens de l'invention et dans tout le document, les notions de « données de localisation et/ou de positionnement » peuvent comporter outre des coordonnées spatiales ou géographiques, un horodatage d'une capture d'une portion de la voûte céleste, par exemple d'une scène d'étude S, dont sont issues lesdites données de localisation et/ou de positionnement. Dans ce cas, l'unité de traitement 21 d'un système optique 10 comportera ou coopérera avec des moyens d' horodatage, telles que, non limitativement, une horloge atomique, une telle horloge coopérant éventuellement avec un téléphone intelligent (connu également sous la terminologie anglo-saxonne Smartphone) et/ou un système de navigation et de localisation par satellite, etc., et les structures de données au sein de la mémoire de données 23 seront aménagées pour enregistrer de telles données de localisation et/ou de position composites.

Le procédé d'élaboration d'une image numérique conforme à l'invention a été décrit lors de sa mise en œuvre par un système optique tel que présenté en lien avec les figures 1 et 2. L'invention prévoit également qu'un tel procédé puisse être mis en œuvre par un système optique présentant une structure distincte, par exemple comportant une lame réfléchissante en lieu et place de la place semi-réfléchissante, ou encore tout autre agencement optique distinct incluant ou non ladite lame semi-réfléchissante. Par exemple, les moyens de capture 24 et les moyens de restitution 25 d'un système optique 10 conforme à l'invention pourraient être positionnés suivant un axe longitudinal du corps creux, les faces actives de ces derniers étant opposées l'un à l'autre.

D'autres modifications peuvent être envisagées sans sortir du cadre de la présente invention défini par les revendications ci-annexées.

## Revendications

1. Système optique (10) comportant :
- une unité de traitement (21) pour produire une image numérique (RRk) ;
- un corps creux (11) comportant :
∘ un objectif (12) pour collecter un ensemble de rayons lumineux entrants (RE) issus d'une scène d'étude (S) ;
∘ un oculaire (13) pour restituer tout ou partie (RE1) desdits rayons lumineux entrants (RE) ;
∘ des moyens de capture (24) présentant une face active, pour capturer tout ou partie (RE2) desdits rayons lumineux entrants (RE) ;
∘ des moyens de restitution (25) comportant une face active pour projeter dans le corps creux (11) l'image numérique sous la forme d'un ensemble de rayons lumineux projetés (RP);
- l'unité de traitement (21) étant agencée pour produire l'image numérique (RRk) à partir des rayons lumineux capturés (RE2) et d'une méta-information (li, 101) enregistrée dans une mémoire de données (23, TM, Ei, TO, EOI) coopérant avec ladite unité de traitement (21), laquelle mémoire de données comporte des enregistrements (Ei) associés à des motifs (Mi) déterminés (R9) et des données de localisation (DLi) de chaque dit motif déterminé (Mi) dans la voûte céleste (R10) ;
- des moyens (26, 27, 28a) pour déterminer des données de positionnement (DP, DL) d'une scène d'étude (S) dans la voûte céleste observée au travers de l'objectif_(12) coopérant avec l'unité de traitement (21), lesdits moyens (26, 27) consistant en des moyens (26) de localisation terrestre du système optique (10) et des moyens (27) pour déterminer l'orientation de l'objectif (12) dudit système optique (10),
ledit système (10) étant **caractérisé en ce que** :
- l'unité de traitement (21) coopère avec une mémoire de programmes (22) comportant des instructions d'un produit programme d'ordinateur pour :
∘ déclencher la capture des rayons lumineux entrants (RE) issus de ladite scène d'étude (S) par les moyens de capture (24) et produire une représentation numérique (Rj) de ladite scène d'étude (S) ;
∘ analyser ladite représentation numérique (Rj) et détecter la présence d'un motif caractéristique ;
∘ extraire d'un premier enregistrement (Ei) de la mémoire de données (23, TM) des données de localisation (DLi) et calculer une distance entre lesdites données de localisation (DLi) extraites et les données de positionnement (DP) de ladite scène d'étude (S) dans la voûte céleste ;
∘ attester de la proximité d'un motif (Mi) associé aux données de localisation (DLi) extraites de la scène d'étude (S) si ladite distance calculée est inférieure à un seuil prédéterminé (dist_max) ;
∘ si une telle proximité est attestée, alors rechercher dans la mémoire de données (23, TM) un enregistrement (Ei) associé à un motif déterminé (Mi) proche dudit motif caractéristique détecté,
∘ élaborer l'image numérique (RRk) à partir de la représentation numérique (Rj) et de la méta-information (li, 101) et restituer ladite image numérique (RRk) par lesdits moyens de restitution (25).

2. Système optique (10) selon la revendication 1 :
- comportant une lame semi-réfléchissante (14) positionnée au sein du corps creux pour réfléchir un premier sous-ensemble de rayons lumineux entrants (RE2) vers la face active desdits moyens de capture (24) et transmettre un deuxième sous- ensemble de rayons lumineux entrants (RE1) vers l'oculaire (13), la lame semi-réfléchissante (14) étant en outre agencée pour transmettre et réfléchir des premier et deuxième sous-ensembles (RP2, RP1) desdits rayons lumineux projetés (RP) respectivement vers la face active des moyens de capture (24) et l'oculaire (13) ;
- pour lequel, les faces actives respectives des moyens de capture (24) et des moyens de restitution (25) se font face et sont agencées de part et d'autre de la lame semi-réfléchissante (14), lesdites faces actives étant traversées par un axe transversal virtuel (AT) du corps creux (11) perpendiculaire à un axe longitudinal virtuel (AL) dudit corps creux (11) et traversant le centre de la lame semi-réfléchissante (14).

3. Système optique (10) selon la revendication précédente pour lequel le corps creux comporte un polariseur (15) pour absorber les rayons lumineux projetés et transmis (RP1) par la lame semi- réfléchissante (14), agencé entre les moyens de capture (24) et les moyens de restitution (25), ledit polariseur étant traversé par l'axe transversal virtuel (AT).

4. Système optique (10) selon l'une quelconque des revendications 2 et 3, pour lequel le corps creux (11) comporte une lentille d'imagerie (17) pour constituer une image à partir des rayons lumineux projetés (RP), agencée entre les moyens de restitution (25) et la lame semi-réfléchissante (14), ladite lentille étant traversée par l'axe transversal virtuel (AT).

5. Système optique (10) selon l'une quelconque des revendications précédentes, comportant en outre des moyens de communication (28b) coopérant avec l'unité de traitement (21), agencés pour réceptionner un message de transmission (MsgT) émis depuis une entité tierce (10T, ST) , l'unité de traitement (21) étant agencée pour :
- décoder un tel message de transmission (MsgT) émis par ladite entité tierce (10T, ST), ledit message de transmission (MsgT) encodant des données caractéristiques d'un motif déterminé, des données de localisation (DLi) et une méta- information associées audit motif ;
- inscrire dans la mémoire de données (23, TM, Ei) lesdites données caractéristiques d'un motif déterminé, lesdites données de localisation (DLi) et ladite méta-information associées audit motif et déduites dudit message de transmission (MsgT).

6. Système optique (10) selon la revendication précédente, pour lequel les moyens de communication (28b) sont agencés pour émettre un message de découverte (MsgD) et l'unité de traitement (21) est en outre agencée pour :
- élaborer ledit message de découverte (MsgD), de sorte que celui-ci encode les données de positionnement (DP, DL) de la scène d'étude (S) dans la voûte céleste ;
- déclencher l'émission dudit message de découverte (MsgD) par les moyens de communication (28b) pour requérir auprès d'une entité tierce (10T, ST) des données caractéristiques d'un motif déterminé par lesdites données de positionnement (DL, DP) de la scène d'étude (S) et une méta-information (li) en lien avec ledit motif déterminé.

7. Système optique (10) selon l'une quelconque des revendications précédentes, comportant en outre des moyens de communication (28b) coopérant avec l'unité de traitement (21), agencés pour émettre un message de transmission (MsgT), l'unité de traitement (21) étant agencée pour :
- rechercher dans la mémoire de données (23, TM, Ei) des données caractéristiques d'un motif déterminé par des données de positionnement (DL, DP) de la scène d'étude (S) et des données caractéristiques d'un motif déterminé, des données de localisation (DLi) et une méta-information associées audit motif ;
- élaborer un message de transmission (MsgT) pour encoder lesdites données caractéristiques d'un motif déterminé, lesdites données de localisation (DLi) et ladite méta-information associées audit motif ;
- déclencher l'émission dudit message de transmission (MsgT) par lesdits moyens de communication (28b).

8. Système optique (10) selon l'une quelconque des revendications 1 à 6, comportant en outre des moyens de communication (28b) coopérant avec l'unité de traitement (21), agencés pour émettre un message de transmission (MsgT) et réceptionner un message de découverte (MsgD) , l'unité de traitement (21) étant agencée pour :
- décoder ledit message de découverte (MsgD) , ledit message de découverte (MsgD) comportant des données de positionnement (DP, DL) d'une scène d'étude (S) dans la voûte céleste ; - rechercher dans la mémoire de données (23, TM, Ei) des données caractéristiques d'un motif déterminé par lesdites données de positionnement (DL, DP) de la scène d'étude (S) déduites dudit message de découverte (MsgD) et des données caractéristiques d'un motif déterminé, des données de localisation (DLi) et une méta-information associées audit motif ;
- élaborer un message de transmission (MsgT) pour encoder lesdites données caractéristiques d'un motif déterminé, lesdites données de localisation (DLi) et ladite méta-information associées audit motif ;
- déclencher l'émission dudit message de transmission (MsgT) par lesdits moyens de communication (28b).

9. Procédé (100) d'élaboration d'une image numérique (RRk) mis en œuvre par l'unité de traitement (21) d'un système optique (10) selon l'une quelconque des revendications précédentes et observant une scène d'étude (S), ladite unité de traitement (21) coopérant avec les moyens de capture (24), les moyens de restitution (25) et la mémoire de données (23) dudit système optique (10),
- la mémoire de données (23, TM) comporte un enregistrement (Ei) associé à un motif (Mi) déterminé comportant une méta-information (li) caractérisant ledit motif (Mi) ;-ledit procédé (100) comporte :
∘ une étape (101) pour déclencher la capture des rayons lumineux entrants (RE) issus de ladite scène d'étude (S) par les moyens de capture (24) et produire une représentation numérique (Rj) de ladite scène d'étude (S) ;
∘ une étape (103) pour analyser ladite représentation numérique (Rj) et détecter la présence d'un motif caractéristique ;
∘ une étape (105) pour rechercher dans la mémoire de données (23, TM) un enregistrement (Ei) associé à un motif déterminé (Mi) proche dudit motif caractéristique détecté ;
∘ une étape (106) pour extraire d'un tel enregistrement (Ei) la valeur de la méta-information associée (li) ;
∘ une étape (107) pour élaborer une image numérique (RRk) à partir de la représentation numérique (Rj) et de ladite méta-information (li) ;
∘ une étape (108) pour restituer par lesdits moyens de restitution (25) ladite image numérique (RRk),
- le procédé (100) comporte, préalablement à l'étape (105) pour rechercher dans la mémoire de données (23, TM) un enregistrement (Ei) associé à un motif (Mi) proche du motif caractéristique détecté :
∘ une étape (104-a, 104-b) pour collecter des données de localisation (DL) produites par lesdits moyens (26, 27, 28a) et déterminer à partir desdites données de localisation (DL) des données de positionnement (DP) de la scène d'étude (S) dans la voûte céleste ;
∘ une étape (104-c) pour extraire d'un premier enregistrement (Ei) de la mémoire de données (23, TM) des données de localisation (DLi) et calculer une distance entre lesdites données de localisation (DLi) extraites et les données de positionnement (DP) de ladite scène d'étude (S) dans la voûte céleste ;
∘ une étape (104-d) pour attester de la proximité d'un motif (Mi) associé aux données de localisation (DLi) extraites de la scène d'étude (S) si ladite distance calculée est inférieure à un seuil prédéterminé (dist_max) ;
∘ ladite étape (105) pour rechercher dans la mémoire de données (23, TM) un enregistrement (Ei) associé à un motif (Mi) proche du motif caractéristique détecté, étant mise en œuvre si et seulement si l'étape (104-d) pour attester de la proximité du motif (Mi) associé aux données de localisation (DLi) extraites de la scène d'étude (S), atteste d'une telle proximité.

10. Procédé (100) selon la revendication 9, comportant préalablement à l'étape (103) pour analyser ladite représentation numérique (Rj) produite par les moyens de capture (24), une étape (102) pour améliorer le contraste et/ou réduire le bruit de la représentation numérique (Rj).

11. Procédé (100) selon la revendication 10, comportant préalablement à l'étape (103) pour analyser ladite représentation numérique (Rj) :
- une étape (102-a), pour déclencher l'acquisition de plusieurs représentations numériques successives par les moyens de capture (24) ;
- une étape (102-b) pour élaborer une seule représentation numérique (Rj) à partir desdites représentations numériques successives.

12. Procédé (100) selon l'une quelconque des revendications 9 à 11, comportant :
- une étape (109) pour enregistrer, à l'issue de l'étape (108) pour restituer l'image numérique (RRk) par les moyens de restitution (25), ladite image numérique (RRk) dans la mémoire de données (23, TRR);
- une étape (110), préalable à l'étape (103) pour analyser la représentation numérique (Rj), pour extraire de ladite mémoire de données (23, TRR) l'image numérique (RRk) issue de la restitution précédente, et soustraire ladite image numérique (RRk) de la représentation numérique (Rj) de la scène d'étude (S) courante.

13. Procédé (100) selon l'une quelconque des revendications 9 à 12, pour lequel :
- l'unité de traitement (21) coopère en outre avec des moyens de communication (28b) pour communiquer avec une entité tierce (10T, ST) ;
- ledit procédé (100) comporte une étape (111) pour élaborer un message de découverte (MsgD) comportant les données de positionnement (DP) de la scène d'étude (S) dans la voûte céleste et en déclencher l'émission, si l'étape (105) pour rechercher dans la mémoire de données (23, TM) un enregistrement (Ei) associé à un motif proche du motif caractéristique n'a pas abouti (105-n).

14. Procédé selon l'une quelconque des revendications 9 à 13, pour lequel l'étape (101) pour déclencher la capture des rayons lumineux entrants (RE) issus de ladite scène d'étude (S) par les moyens de capture (24) et produire une représentation numérique (Rj) de ladite scène d'étude (S) est mise en œuvre de sorte à capturer une scène d'étude (S) désignées par des données de positionnement (DP, DL) de ladite scène d'étude (S) dans la voûte céleste.

## Patentansprüche

1. Optisches System (10), das Folgendes aufweist:
- eine Verarbeitungseinheit (21) zum Erzeugen eines digitalen Bildes (RRk);
- einen Hohlkörper (11), der Folgendes aufweist:
∘ ein Objektiv (12) zum Sammeln einer Gruppe von einfallenden Lichtstrahlen (RE), die aus einer Untersuchungsszene (S) stammen;
∘ ein Okular (13) zum vollständigen oder teilweisen Wiedergeben (RE1) der einfallenden Lichtstrahlen (RE);
∘ Erfassungsmittel (24), die eine aktive Fläche aufweisen, um alle oder einen Teil (RE2) der einfallenden Lichtstrahlen (RE) zu erfassen;
∘ Wiedergabemittel (25), die eine aktive Fläche zum Projizieren des digitalen Bildes in Form einer Gruppe von projizierten Lichtstrahlen (RP) in den Hohlkörper (11) aufweisen;
- wobei die Verarbeitungseinheit (21) so angeordnet ist, dass sie das digitale Bild (RRk) aus den erfassten Lichtstrahlen (RE2) und einer in einem Datenspeicher (23, TM, Ei, TO, EOI) gespeicherten Metainformation (li, 101) erzeugt, der mit der Verarbeitungseinheit (21) zusammenwirkt, wobei der Datenspeicher Datensätze (Ei), die bestimmten (R9) Mustern (Mi) zugeordnet sind, und Lokalisierungsdaten (DLi) jedes bestimmten Musters (Mi) an dem Himmelsgewölbe (R10) aufweist;
- Mittel (26, 27, 28a) zum Bestimmen von Positionierungsdaten (DP, DL) einer Untersuchungsszene (S) an dem Himmelsgewölbe, die durch das mit der Verarbeitungseinheit (21) zusammenwirkende Objektiv (12) beobachtet wird, wobei die Mittel (26, 27) aus Mitteln (26) zum terrestrischen Lokalisieren des optischen Systems (10) und Mitteln (27) zum Bestimmen der Ausrichtung des Objektivs (12) des optischen Systems (10) bestehen,
wobei das System (10) **dadurch gekennzeichnet ist, dass**:
- wobei die Verarbeitungseinheit (21) mit einem Programmspeicher (22) zusammenwirkt, der Anweisungen eines Computerprogrammprodukts für Folgendes aufweist:
∘ Auslösen der Erfassung der einfallenden Lichtstrahlen (RE), die aus der Untersuchungsszene (S) stammen, durch die Erfassungsmittel (24) und Erzeugen einer digitalen Darstellung (Rj) der Untersuchungsszene (S);
∘ Analysieren der digitalen Darstellung (Rj) und Erkennen des Vorhandenseins eines charakteristischen Musters;
∘ Extrahieren der Lokalisierungsdaten (DLi) aus einem ersten Datensatz (Ei) des Datenspeichers (23, TM) und Berechnen eines Abstands zwischen den extrahierten Lokalisierungsdaten (DLi) und den Positionierungsdaten (DP) der Untersuchungsszene (S) an dem Himmelsgewölbe;
∘ Nachweisen der Nähe eines Musters (Mi), das den Lokalisierungsdaten (DLi) zugeordnet ist, die aus der Untersuchungsszene (S) extrahiert wurden, wenn der berechnete Abstand unter einem vorbestimmten Schwellenwert (dist_max) liegt;
∘ wenn eine solche Nähe nachgewiesen ist, dann Suchen im Datenspeicher (23, TM) nach einem Datensatz (Ei), der einem bestimmten Muster (Mi) zugeordnet ist, das nahe an dem erkannten charakteristischen Muster liegt,
∘ Erstellen des digitalen Bildes (RRk) anhand der digitalen Darstellung (Rj) und der Metainformation (li, 101) und Wiedergeben des digitalen Bildes (RRk) durch die Wiedergabemittel (25).

2. Optisches System (10) nach Anspruch 1:
- das eine halbreflektierenden Platte (14) aufweist, die innerhalb des Hohlkörpers positioniert ist, um eine erste Untergruppe der einfallenden Lichtstrahlen (RE2) zur aktiven Seite der Erfassungsmittel (24) zu reflektieren und eine zweite Untergruppe der einfallenden Lichtstrahlen (RE1) zu dem Okular (13) durchzulassen, wobei die halbreflektierende Platte (14) ferner so angeordnet ist, dass sie die erste und die zweite Untergruppe (RP2, RP1) der projizierten Lichtstrahlen (RP) jeweils zur aktiven Seite der Erfassungsmittel (24) und zu dem Okular (13) durchlässt bzw. reflektiert;
- wobei sich die jeweiligen aktiven Flächen der Erfassungsmittel (24) und der Wiedergabemittel (25) gegenüberstehen und auf beiden Seiten der halbreflektierenden Platte (14) angeordnet sind, wobei die aktiven Flächen von einer virtuellen Querachse (AT) des Hohlkörpers (11) senkrecht zu einer virtuellen Längsachse (AL) des Hohlkörpers (11) durchquert werden und die Mitte der halbreflektierenden Platte (14) durchqueren.

3. Optisches System (10) nach dem vorhergehenden Anspruch, wobei der Hohlkörper einen Polarisator (15) zur Absorbieren der projizierten und von der halbreflektierenden Platte (14) durchgelassenen Lichtstrahlen (RP1) aufweist, der zwischen den Erfassungsmitteln (24) und den Wiedergabemitteln (25) angeordnet ist, wobei der Polarisator von der virtuellen Querachse (AT) durchquert wird.

4. Optisches System (10) nach einem der Ansprüche 2 und 3, wobei der Hohlkörper (11) eine Bildgebungslinse (17) aufweist, um ein Bild aus den projizierten Lichtstrahlen (RP) zu bilden, die zwischen den Wiedergabemitteln (25) und der halbreflektierenden Platte (14) angeordnet sind, wobei die Linse von der virtuellen Querachse (AT) durchquert wird.

5. Optisches System (10) nach einem der vorhergehenden Ansprüche, das ferner Kommunikationsmittel (28b) aufweist, die mit der Verarbeitungseinheit (21) zusammenwirken und so angeordnet sind, dass sie eine von einer dritten Einheit (10T, ST) gesendeten Übertragungsnachricht (MsgT) empfangen, wobei die Verarbeitungseinheit (21) für Folgendes angeordnet ist:
- Decodieren einer solchen Übertragungsnachricht (MsgT), die von der dritten Einheit (10T, ST) gesendet wird, wobei die Übertragungsnachricht (MsgT) charakteristische Daten eines bestimmten Musters, Lokalisierungsdaten (DLi) und eine Metainformation codiert, die dem Muster zugeordnet sind;
- Aufzeichnen der charakteristischen Daten eines bestimmten Musters, der Lokalisierungsdaten (DLi) und der Metainformation, die dem Muster zugeordnet sind und aus der Übertragungsnachricht (MsgT) abgeleitet wurden, im Datenspeicher (23, TM, Ei).

6. Optisches System (10) nach dem vorhergehenden Anspruch, wobei die Kommunikationsmittel (28b) so angeordnet sind, dass sie eine Entdeckungsnachricht (MsgD) senden, und die Verarbeitungseinheit (21) ferner für Folgendes angeordnet ist:
- Erstellen der Entdeckungsnachricht (MsgD), sodass diese die Positionierungsdaten (DP, DL) der Untersuchungsszene (S) im Himmelsgewölbe codiert;
- Auslösen des Sendens der Entdeckungsnachricht (MsgD) durch die Kommunikationsmittel (28b), um von einer dritten Einheit (10T, ST) die charakteristischen Daten eines durch die Positionierungsdaten (DL, DP) der Untersuchungsszene (S) bestimmten Musters und eine Metainformation (li) in Verbindung mit dem bestimmten Muster anzufordern.

7. Optisches System (10) nach einem der vorhergehenden Ansprüche, das ferner Kommunikationsmittel (28b) aufweist, die mit der Verarbeitungseinheit (21) zusammenwirken und so angeordnet sind, dass sie eine Übertragungsnachricht (MsgT) senden, wobei die Verarbeitungseinheit (21) für Folgendes angeordnet ist:
- Suchen im Datenspeicher (23, TM, Ei) nach charakteristischen Daten eines durch Positionierungsdaten (DL, DP) der Untersuchungsszene (S) bestimmten Musters und nach charakteristischen Daten eines bestimmten Musters, Lokalisierungsdaten (DLi) und einer Metainformation, die dem Muster zugeordnet sind;
- Erstellen einer Übertragungsnachricht (MsgT), um die charakteristischen Daten eines bestimmten Musters, die Lokalisierungsdaten (DLi) und die Metainformationen, die dem Muster zugeordnet sind, zu codieren;
- Auslösen des Sendens der Übertragungsnachricht (MsgT) über die Kommunikationsmittel (28b).

8. Optisches System (10) nach einem der Ansprüche 1 bis 6, das ferner Kommunikationsmittel (28b) aufweist, die mit der Verarbeitungseinheit (21) zusammenwirken und so angeordnet sind, dass sie eine Übertragungsnachricht (MsgT) senden und eine Entdeckungsnachricht (MsgD) empfangen, wobei die Verarbeitungseinheit (21) für Folgendes angeordnet ist:
- Decodieren der Entdeckungsnachricht (MsgD), wobei die Entdeckungsnachricht (MsgD) Positionierungsdaten (DP, DL) einer Untersuchungsszene (S) im Himmelsgewölbe aufweist;
- Suchen im Datenspeicher (23, TM, Ei) nach charakteristischen Daten eines durch die Positionierungsdaten (DL, DP) der Untersuchungsszene (S), die aus der Entdeckungsnachricht (MsgD) abgeleitet wurden, bestimmten Musters und nach den charakteristischen Daten eines bestimmten Musters, den Lokalisierungsdaten (DLi) und einer Metainformation, die dem Muster zugeordnet sind;
- Erstellen einer Übertragungsnachricht (MsgT), um die charakteristischen Daten eines bestimmten Musters, die Lokalisierungsdaten (DLi) und die Metainformationen, die dem Muster zugeordnet sind, zu codieren;
- Auslösen des Sendens der Übertragungsnachricht (MsgT) über die Kommunikationsmittel (28b).

9. Verfahren (100) zum Erstellen eines digitalen Bildes (RRk), das von der Verarbeitungseinheit (21) eines optischen Systems (10) nach einem der vorhergehenden Ansprüche durchgeführt wird und eine Untersuchungsszene (S) beobachtet, wobei die Verarbeitungseinheit (21) mit den Erfassungsmitteln (24), den Wiedergabemitteln (25) und dem Datenspeicher (23) des optischen Systems (10) zusammenwirkt,
- wobei der Datenspeicher (23, TM) einen Datensatz (Ei) aufweist, der einem bestimmten Muster (Mi) zugeordnet ist, das eine Metainformation (li) aufweist, die das Muster (Mi) charakterisiert;-wobei das Verfahren (100) aufweist:
∘ einen Schritt (101) zum Auslösen der Erfassung der einfallenden Lichtstrahlen (RE), die aus der Untersuchungsszene (S) stammen, durch die Erfassungsmittel (24) und Erzeugen einer digitalen Darstellung (Rj) der Untersuchungsszene (S);
∘ einen Schritt (103) zum Analysieren der digitalen Darstellung (Rj) und Erkennen des Vorhandenseins eines charakteristischen Musters;
∘ einen Schritt (105) zum Suchen im Datenspeicher (23, TM) nach einem Datensatz (Ei), der einem bestimmten Muster (Mi) zugeordnet ist, das nahe an dem erkannten charakteristischen Muster liegt;
∘ einen Schritt (106) zum Extrahieren des Werts der zugehörigen Metainformation (li) aus einem solchen Datensatz (Ei);
∘ einen Schritt (107) zum Erstellen eines digitalen Bildes (RRk) anhand der digitalen Darstellung (Rj) und der Metainformation (li);
∘ einen Schritt (108) zum Wiedergeben des digitalen Bildes (RRk) durch die Wiedergabemittel (25),
- wobei das Verfahren (100) vor dem Schritt (105) zum Suchen im Datenspeicher (23, TM) nach einem Datensatz(Ei), der einem Muster (Mi) zugeordnet ist, das nahe an dem erkannten charakteristischen Muster liegt, Folgendes aufweist:
∘ einen Schritt (104-a, 104-b) zum Sammeln von Lokalisierungsdaten (DL), die von den Mitteln (26, 27, 28a) erzeugt werden, und zum Bestimmen von Positionierungsdaten (DP) der Untersuchungsszene (S) im Himmelsgewölbe anhand der Lokalisierungsdaten (DL);
∘ einen Schritt (104-c) zum Extrahieren der Lokalisierungsdaten (DLi) aus einem ersten Datensatz (Ei) des Datenspeichers (23, TM) und Berechnen eines Abstands zwischen den extrahierten Lokalisierungsdaten (DLi) und den Positionierungsdaten (DP) der Untersuchungsszene (S) an dem Himmelsgewölbe;
∘ einen Schritt (104-d) zum Nachweisen der Nähe eines Musters (Mi), das den Lokalisierungsdaten (DLi) zugeordnet ist, die aus der Untersuchungsszene (S) extrahiert wurden, wenn der berechnete Abstand unter einem vorbestimmten Schwellenwert (dist_max) liegt;
∘ wobei der Schritt (105) zum Suchen im Datenspeicher (23, TM) nach einem Datensatz (Ei), der einem Muster (Mi) nahe an dem erkannten charakteristischen Muster zugeordnet ist, nur dann durchgeführt wird, wenn der Schritt (104-d) zum Nachweisen der Nähe des Musters (Mi), das den aus der Untersuchungsszene (S) extrahierten Lokalisierungsdaten (DLi) zugeordnet ist, eine solche Nähe nachweist.

10. Verfahren (100) nach Anspruch 9, das vor dem Schritt (103) zum Analysieren der von den Erfassungsmitteln (24) erzeugten digitalen Darstellung (Rj) einen Schritt (102) zum Verbessern des Kontrasts und/oder zum Reduzieren des Rauschens der digitalen Darstellung (Rj) aufweist.

11. Verfahren (100) nach Anspruch 10, das vor dem Schritt (103) zum Analysieren der digitalen Darstellung (Rj) Folgendes aufweist:
- einen Schritt (102-a) zum Auslösen des Erfassens mehrerer aufeinanderfolgender digitaler Darstellungen durch die Erfassungsmittel (24);
- einen Schritt (102-b) zum Erstellen einer einzigen digitalen Darstellung (Rj) anhand der aufeinanderfolgenden digitalen Darstellungen.

12. Verfahren (100) nach einem der Ansprüche 9 bis 11, das Folgendes aufweist:
- einen Schritt (109) zum Speichern des digitalen Bildes (RRk) im Datenspeicher (23, TRR) nach Abschluss des Schritts (108) zum Wiedergeben des digitalen Bildes (RRk) durch die Wiedergabemittel (25);
- einen Schritt (110), der dem Schritt (103) zum Analysieren der digitalen Darstellung (Rj) vorausgeht, um aus dem Datenspeicher (23, TRR) das aus der vorherigen Wiedergabe stammende digitale Bild (RRk) zu extrahieren und das digitale Bild (RRk) von der digitalen Darstellung (Rj) der aktuellen Untersuchungsszene (S) zu subtrahieren.

13. Verfahren (100) nach einem der Ansprüche 9 bis 12, wobei:
- die Verarbeitungseinheit (21) ferner mit Kommunikationsmitteln (28b) zusammenwirkt, um mit einer dritten Einheit (10T, ST) zu kommunizieren;
- das Verfahren (100) einen Schritt (111) zum Erstellen einer Entdeckungsnachricht (MsgD) aufweist, das die Positionierungsdaten (DP) der Untersuchungsszene (S) im Himmelsgewölbe aufweist und deren Senden auslöst, wenn der Schritt (105) zum Suchen im Datenspeicher (23, TM) nach einem Datensatz (Ei), der einem Muster nahe dem charakteristischen Muster zugeordnet ist, nicht erfolgreich war (105-n).

14. Verfahren nach einem der Ansprüche 9 bis 13, wobei der Schritt (101) zum Auslösen der Erfassung der einfallenden Lichtstrahlen (RE) aus der Untersuchungsszene (S) durch die Erfassungsmittel (24) und zum Erzeugen einer digitalen Darstellung (Rj) der Untersuchungsszene (S) so durchgeführt wird, dass eine Untersuchungsszene (S) erfasst wird, die durch Positionierungsdaten (DP, DL) der Untersuchungsszene (S) im Himmelsgewölbe bezeichnet ist.

## Claims

1. An optical system (10) comprising:
- a processing unit (21) for producing a digital image (RRk) ;
- a hollow body (11) comprising:
∘ an objective (12) for collecting a set of incoming light rays (RE) from a study scene (S);
∘ an eyepiece (13) for rendering all or part (RE1) of said incoming light rays (RE);
∘ capture means (24) having an active face, for capturing all or part (RE2) of said incoming light rays (RE);
∘ rendering means (25) comprising an active face for projecting the digital image in the form of a set of projected light rays (RP) into the hollow body (11);
- the processing unit (21) being arranged to produce the digital image (RRk) from the captured light rays (RE2) and from meta-information (li, 101) recorded in a data memory (23, TM, Ei, TO, EOI) cooperating with said processing unit (21), which data memory comprises records (Ei) associated with determined patterns (Mi) (R9) and location data (DLi) of each said determined pattern (Mi) in the celestial vault (R10);
- means (26, 27, 28a) for determining positioning data (DP, DL) of a study scene (S) in the celestial vault observed through the objective_(12) cooperating with the processing unit (21), said means (26, 27) consisting of means (26) for locating the optical system (10) on earth and means (27) for determining the orientation of the objective (12) of said optical system (10),
said system (10) being **characterised in that**:
- the processing unit (21) cooperates with a program memory (22) comprising instructions of a computer program product to:
∘ trigger capture of the incoming light rays (RE) from said study scene (S) by the capture means (24) and produce a digital representation (Rj) of said study scene (S);
∘ analyse said digital representation (Rj) and detect the presence of a characteristic pattern;
∘ extract from a first record (Ei) of the data memory (23, TM) the location data (DLi) and calculate a distance between said location data (DLi) extracted and the positioning data (DP) of said study scene (S) in the celestial vault;
∘ certify proximity of a pattern (Mi) associated with the location data (DLi) extracted from the study scene (S) if said distance calculated is less than a predetermined threshold (dist_max);
∘ if such proximity is certified, then search in the data memory (23, TM) for a record (Ei) associated with a determined pattern (Mi) close to said detected characteristic pattern,
∘ create the digital image (RRk) from the digital representation (Rj) and the meta-information (li, 101) and render said digital image (RRk) by said rendering means (25).

2. The optical system (10) according to claim 1:
- comprising a semi-reflective blade (14) positioned within the hollow body to reflect a first subset of incoming light rays (RE2) toward the active face of said capture means (24) and transmit a second subset of incoming light rays (RE1) toward the eyepiece (13), the semi-reflective blade (14) being further arranged to transmit and reflect first and second subsets (RP2, RP1) of said projected light rays (RP) respectively to the active face of the capture means (24) and the eyepiece (13);
- for which, the respective active faces of the capture means (24) and of the rendering means (25) face each other and are arranged on either side of the semi-reflective blade (14), said active faces being crossed by a virtual transverse axis (AT) of the hollow body (11) perpendicular to a virtual longitudinal axis (AL) of said hollow body (11) and crossing the centre of the semi-reflective blade (14).

3. The optical system (10) according to the preceding claim, wherein the hollow body comprises a polariser (15) for absorbing the light rays projected and transmitted (RP1) by the semi-reflective blade (14), arranged between the capture means (24) and the rendering means (25), said polariser being crossed by the virtual transverse axis (AT).

4. The optical system (10) according to any one of claims 2 and 3, wherein the hollow body (11) comprises an imaging lens (17) to constitute an image from the projected light rays (RP), arranged between the rendering means (25) and the semi-reflective blade (14), said lens being crossed by the virtual transverse axis (AT).

5. The optical system (10) according to any one of the preceding claims, further comprising communication means (28b) cooperating with the processing unit (21), arranged to receive a transmission message (MsgT) issued from a third-party entity (10T, ST), the processing unit (21) being arranged to:
- decode such a transmission message (MsgT) issued by said third-party entity (10T, ST), said transmission message (MsgT) encoding characteristic data of a given pattern, location data (DLi) and meta-information associated with said pattern;
- register in the data memory (23, TM, Ei) said characteristic data of a determined pattern, said location data (DLi) and said meta-information associated with said pattern and deduced from said transmission message (MsgT).

6. The optical system (10) according to the preceding claim, wherein the communication means (28b) are arranged to issue a discovery message (MsgD) and the processing unit (21) is further arranged to:
- create said discovery message (MsgD), such that it encodes the positioning data (DP, DL) of the study scene (S) in the celestial vault;
- trigger issuance of said discovery message (MsgD) by the communication means (28b) to request from a third party entity (10T, ST) characteristic data of a pattern determined by said positioning data (DL, DP) of the study scene (S) and meta-information (li) in connection with said determined pattern.

7. The optical system (10) according to any one of the preceding claims, further comprising communication means (28b) cooperating with the processing unit (21), arranged to transmit a transmission message (MsgT), the processing unit (21) being arranged to:
- search in the data memory (23, TM, Ei) for characteristic data of a pattern determined by positioning data (DL, DP) of the study scene (S) and characteristic data of a determined pattern, location data (DLi) and meta-information associated with said pattern;
- create a transmission message (MsgT) to encode said characteristic data of a given pattern, said location data (DLi) and said meta-information associated with said pattern;
- trigger issuance of said transmission message (MsgT) by said communication means (28b).

8. The optical system (10) according to any one of claims 1 to 6, further comprising communication means (28b) cooperating with the processing unit (21), arranged to issue a transmission message (MsgT) and receive a discovery message (MsgD), the processing unit (21) being arranged to:
- decode said discovery message (MsgD), said discovery message (MsgD) comprising positioning data (DP, DL) of a study scene (S) in the celestial vault; - search in the data memory (23, TM, Ei) for characteristic data of a pattern determined by said positioning data (DL, DP) of the study scene (S) deduced from said discovery message (MsgD) and characteristic data of a determined pattern, location data (DLi) and meta-information associated with said pattern;
- create a transmission message (MsgT) to encode said characteristic data of a given pattern, said location data (DLi) and said meta-information associated with said pattern;
- trigger issuance of said transmission message (MsgT) by said communication means (28b).

9. A method (100) for creating a digital image (RRk) implemented by the processing unit (21) of an optical system (10) according to any one of the preceding claims and observing a study scene (S), said processing unit (21) cooperating with the capture means (24), the rendering means (25) and the data memory (23) of said optical system (10),
- the data memory (23, TM) comprises a record (Ei) associated with a determined pattern (Mi) comprising meta-information (li) characterising said pattern (Mi);-said method (100) comprises:
∘ a step (101) of triggering capture of the incoming light rays (RE) from said study scene (S) by the capture means (24) and creating a digital representation (Rj) of said study scene (S);
∘ a step (103) of analysing said digital representation (Rj) and detecting presence of a characteristic pattern;
∘ a step (105) of searching the data memory (23, TM) for a record (Ei) associated with a determined pattern (Mi) close to said detected characteristic pattern;
∘ a step (106) of extracting from such a record (Ei) the value of the associated meta-information (li);
∘ a step (107) of creating a digital image (RRk) from the digital representation (Rj) and said meta-information (li);
∘ a step (108) of rendering said digital image (RRk) by said rendering means (25),
- the method (100) comprises, prior to the step (105) of searching in the data memory (23, TM) a record (Ei) associated with a pattern (Mi) close to the detected characteristic pattern:
∘ a step (104-a, 104-b) of collecting location data (DL) produced by said means (26, 27, 28a) and determining from said location data (DL) the positioning data (DP) of the study scene (S) in the celestial vault;
∘ a step (104-c) of extracting from a first record (Ei) of the data memory (23, TM) the location data (DLi) and calculating a distance between said extracted location data (DLi) and the positioning data (DP) of said study scene (S) in the celestial vault;
∘ a step (104-d) of certifying proximity of a pattern (Mi) associated with the location data (DLi) extracted from the study scene (S) if said distance calculated is less than a predetermined threshold (dist_max);
∘ said step (105) of searching in the data memory (23, TM) for a record (Ei) associated with a pattern (Mi) close to the detected characteristic pattern, being implemented if and only if the step (104-d) of certifying proximity of the pattern (Mi) associated with the location data (DLi) extracted from the study scene (S), certifies such proximity.

10. The method (100) according to claim 9, comprising, prior to step (103) of analysing said digital representation (Rj) produced by the capture means (24), a step (102) of improving contrast and/or reducing noise of the digital representation (Rj).

11. The method (100) according to claim 10, comprising, prior to step (103) of analysing said digital representation (Rj):
- a step (102-a) of triggering acquisition of several successive digital representations by the capture means (24);
- a step (102-b) of creating a single digital representation (Rj) from said successive digital representations.

12. The method (100) according to any one of claims 9 to 11, comprising:
- a step (109) of recording, at the end of the step (108) of rendering the digital image (RRk) by the rendering means (25), said digital image (RRk) in the data memory (23, TRR);
- a step (110), prior to the step (103) of analysing the digital representation (Rj), to extract from said data memory (23, TRR) the digital image (RRk) derived from the previous rendering, and subtracting said digital image (RRk) from the digital representation (Rj) of the current study scene (S).

13. The method (100) according to any one of claims 9 to 12, wherein:
- the processing unit (21) further cooperates with communication means (28b) to communicate with a third-party entity (10T, ST);
- said method (100) comprises a step (111) of creating a discovery message (MsgD) comprising the positioning data (DP) of the study scene (S) in the celestial vault and triggering issuance thereof, if the step (105) of searching in the data memory (23, TM) for a record (Ei) associated with a pattern close to the characteristic pattern has failed (105-n).

14. The method according to any one of claims 9 to 13, wherein the step (101) of triggering capture of the incoming light rays (RE) from said study scene (S) by the capture means (24) and producing a digital representation (Rj) of said study scene (S) is implemented so as to capture a study scene (S) designated by positioning data (DP, DL) of said study scene (S) in the celestial vault.
